# EUROPEAN PATENT APPLICATION

(11) **EP 3 832 969 A1**
(43) Date of publication of application: **09.06.2021**
(21) Application number: 19848150.9
(22) Date of filing: 06.08.2019
(51) Int. Cl.: H04L 29/06

(54) **METHOD AND APPARATUS FOR SERVICE REQUEST, NEGOTIATION AND RESPONSE, AND NETWORK DEVICE AND SYSTEM**

(30) Priority: 06.08.2018 CN 201810887064
(71) Applicant: ZTE Corporation, shenzhen Guangdong 518057 (CN)
(72) Inventor: ZHANG, Lu, Shenzhen, Guangdong 518057 (CN)
(74) Representative: Betten & Resch
(86) International application number: PCT/CN2019/099430
(87) International publication number: WO 2020/029954

(57) **Abstract**

The embodiments of the present application discloses method and apparatus for service requesting, service negotiation and service response, network device and network system. The method for service negotiation may include sending a service request carrying a first public network communication address of a service requesting terminal to a service response terminal based on a request from the service requesting terminal; and sending a response message to the service requesting terminal based on a response from the service response terminal. The response message carries a second public network communication address of the service response terminal. The first public network communication address and the second public network communication address are configured to establish a public network communication link between the service response terminal and the service requesting terminal. The public network communication link is a communication link established based on the public network communication addresses.

## Description

### CROSS-REFERENCE TO RELATED APPLICATION

This application is filed on the basis of application No. 201810887064.6 filed August 6, 2018, and claims priority of the Chinese patent application. The content of the Chinese application is incorporated herein by reference in its entirety.

### TECHNICAL FIELD

The present application relates to the field of communication, for example, to a method and apparatus for service requesting, service negotiation and service response, network device and network system.

### BACKGROUND

In Rich Communication Suite (RCS), the transmission of multimedia service data is mainly implemented by Message Session Relay Protocol (MSRP). MSRP's protocol stack transmits messages or files in a peer-to-peer manner based on Transmission Control Protocol (TCP). This transmission mode has the characteristics of fast data transmission and low bandwidth consumption for transmission. MSRP is suitable for services with high real-time requirements, such as Instant Messaging (IM), file transferring, picture sharing, gaming, and business operation controlling. However, in related schemes, when MSRP is adopted for data transmission, all MSRP media service data needs to be relayed through a Session Border Controller (SBC), and then sent by the SBC to a receiving terminal. Relaying through the SBC is mainly to implement Network Address Translation (NAT) traversal and authorized status verification of media addresses, etc.

With the development of the 5th generation mobile communication system (5G) network, the amount of data transmitted between terminals and Application Servers (AS) is constantly increasing, and the required data transmission delay is getting smaller and smaller, and the mode of relaying through SBC no longer meets the requirements of business development. So, there is a need to improve the schemes in related technologies.

### SUMMARY

Methods and devices for service requesting, service negotiation and service response, network devices and network systems provided by the embodiments of the present application solve the problem that media service data needs to be relayed through a SBC for transmission between an AS and a terminal in related technologies, resulting in long delay in data transmission and poor service experience of users.

In order to solve the above technical problems, the embodiments of this application provide a method for service negotiation, comprising following steps of:
sending a service request carrying a first public network communication address of a service requesting terminal to a service response terminal based on a request from the service requesting terminal;
sending a response message to the service requesting terminal based on a response from the service response terminal, wherein the response message carries a second public network communication address of the service response terminal, the first public network communication address and the second public network communication address are configured to establish a public network communication link between the service response terminal and the service requesting terminal.

The embodiments of this application also provide a method for service requesting, comprising following steps of:
sending a request message for a service request to a SBC, wherein the request message is configured to instruct the SBC to send a service request carrying a first public network communication address of a local terminal to a service response terminal;
receiving a response message sent by the SBC upon receipt of a service response from the service response terminal, wherein the response message carries a second public network communication address of the service response terminal;
establishing a public network communication link with the service response terminal based on the second public network communication address and transmitting service data through the public network communication link.

The embodiments of this application also provide a method for service response, comprising following steps of:
receiving a service request carrying a first public network communication address of a service requesting terminal sent by a SBC;
sending a service response corresponding to the service request to the SBC, wherein the service response is configured to instruct the SBC to send a response message carrying a second public network communication address of a local terminal to the service requesting terminal;
establishing a public network communication link with the service requesting terminal based on the first public network communication address, and transmitting service data through the public network communication link.

The embodiments of this application also provide an apparatus for service negotiation apparatus, comprising:
a request forwarding module configured to send a service request carrying a first public network communication address of a service requesting terminal to a service response terminal based on a request from the service requesting terminal;
a response forwarding module configured to send a response message to the service requesting terminal based on a response from the service response terminal, wherein the response message carries a second public network communication address of the service response terminal, and the first public network communication address and the second public network communication address are configured to establish a public network communication link between the service response terminal and the service requesting terminal.

The embodiments of this application also provide an apparatus for service requesting, comprising:
a request sending module configured to send a request message for a service request to a SBC, wherein the request message is configured to instruct the SBC to send a service request carrying a first public network communication address of a local terminal to a service response terminal;
a response receiving module configured to receive the response message sent by the service response terminal through the SBC upon receipt of the service request, wherein the response message carries a second public network communication address of the service response terminal;
a first link establishing module configured to establish a public network communication link with the service response terminal based on the second public network communication address and transmit service data through the public network communication link.

The embodiments of this application also provide an apparatus for service response, comprising:
a request receiving module configured to receive a service request carrying a first public network communication address of a service requesting terminal sent by a SBC;
a response sending module configured to send a service response corresponding to the service request to the SBC, wherein the service response is configured to instruct the SBC to send a response message carrying a second public network communication address of a local terminal to the service requesting terminal;
a second link establishing module configured to establish a public network communication link with the service requesting terminal based on the first public network communication address and transmit service data through the public network communication link.

The embodiments of this application also provide a network device, comprising: a processor, a memory and a communication bus;
the communication bus is configured to perform communication between the processor and the memory;
the processor is configured to execute a service negotiation program stored in the memory to perform the above method service negotiation; or the processor is configured to execute the service requesting program stored in the memory to perform the above method service requesting; or the processor is configured to execute the service response program stored in the memory to perform the above method for service response.

The embodiments of this application also provide a network system, comprising: a terminal, a SBC, and an AS, which are in communication in pairs;
the terminal is the above network device in which the processor can execute a service requesting program to perform the above method for service requesting; the SBC is the above network device in which the processor can execute a service negotiation program to perform the above method for service negotiation; the AS is the above network device, in which the processor can execute a service response program to perform the above method for service response;
or
the terminal is the above network device, in which the processor can execute a service response program to perform the above method for service response; the SBC is the above network device, in which the processor can execute a service negotiation program to perform the above method for service negotiation; the AS is the above network device, in which the processor can execute a service requesting program to perform the above method for service requesting.

The embodiments of this application also provide a storage medium storing at least one of a service negotiation program, a service requesting program and a service response program, wherein the service negotiation program can be executed by a processor to perform the above method for service negotiation, wherein the service requesting program can be executed by a processor to perform the above method for service requesting, and wherein the service response program can be executed by a processor to perform the above method for service response.

### BRIEF DESCRIPTION OF DRAWINGS

Fig. 1 is a schematic structural diagram of a communication system according to related technologies;
Fig. 2 is an interaction flow chart of a service implementation scheme according to embodiment one of the present application;
Fig. 3 is an interaction flow chart of another service implementation scheme according to embodiment two of the present application;
Fig. 4 is a flow chart of an SBC generating a service request according to embodiment two of the present application;
Fig. 5 is an interaction flow chart of another service implementation scheme according to embodiment three of the present application;
Fig. 6 is a schematic structural diagram of a service requesting apparatus according to embodiment four of the present application;
Fig. 7 is a schematic structural diagram of a service negotiation apparatus according to embodiment four of the present application;
Fig. 8 is a schematic structural diagram of a service response apparatus according to embodiment four of the present application;
Fig. 9 is a schematic structural diagram of hardware of a network device according to embodiment seven of the present application;
Fig. 10 is a schematic diagram of a network system according to embodiment seven of the present application;
Fig. 11 is a schematic structural diagram of another network system according to embodiment eight of the present application;
Fig. 12 is an interaction flow chart of another service implementation scheme according to embodiment eight of the present application;
Fig. 13 is an interaction flow chart of another service implementation scheme according to embodiment eight of the present application;
Fig. 14 is a flow chart of a network system defending against media attacks from a malicious terminal according to embodiment eight of the present application.

### DETAILED DESCRIPTION

Hereinafter, embodiments of this application will be described with reference to the accompanying drawings. The specific embodiments described herein are merely intended to explain the present application and are not intended to limit the present application

### Embodiment One

Communication technology has evolved to the 5th generation, and the 5G communication technology is mainly oriented to five main application scenarios in the future:
1) Ultra-high speed scenario, which provides ultra-fast data network access for future mobile broadband users;
2) Large-scale crowd support, which provides high-quality mobile broadband experience for areas or occasions with high crowd density;
3) Optimal experience anytime and anywhere, which ensures that users still enjoy high-quality services even when they are on the move;
4) Ultra-reliable real-time connection, which ensures that new applications and user instances meet stringent standards in terms of delay and reliability; and
5) Ubiquitous thing-to-thing communication, which ensures efficient handling of diversified communications of a large number of devices, including machines and sensors.

With the development of 5G network, rapid transmission of more information and richer service experience can be provided. Multimedia content has become a new trend of technology development instead of text messages, video calls, personal social presentation and other features. RCS has become a development direction of service applications based on 5G network.

RCS is a technical standard with unified service set definition, which is planned by the Global System for Mobile Communications Assembly (GSMA) and built on the IP Multimedia Subsystem (IMS) network. It is a general term for implementing multimedia services such as voice, message and status presentation based on mobile phone directory.

RCS is an application based on IMS network. IMS is a subsystem supporting Internet Protocol (IP) multimedia services proposed by Third Generation Partnership Project (3GPP), which is the development direction of multimedia communication. As an application subsystem in the 4th Generation Mobile Communication System (4G) era, it may well meet the communication between people in 4G era. A notable feature of RCS is that it adopts a Session Initial Protocol (SIP) system, performs communications independent of access modes, and has many capabilities such as separation of control function and bearing capacity, separation of call and session, separation of application and service, separation of service and network, and integration of mobile network and Internet service of multimedia services.

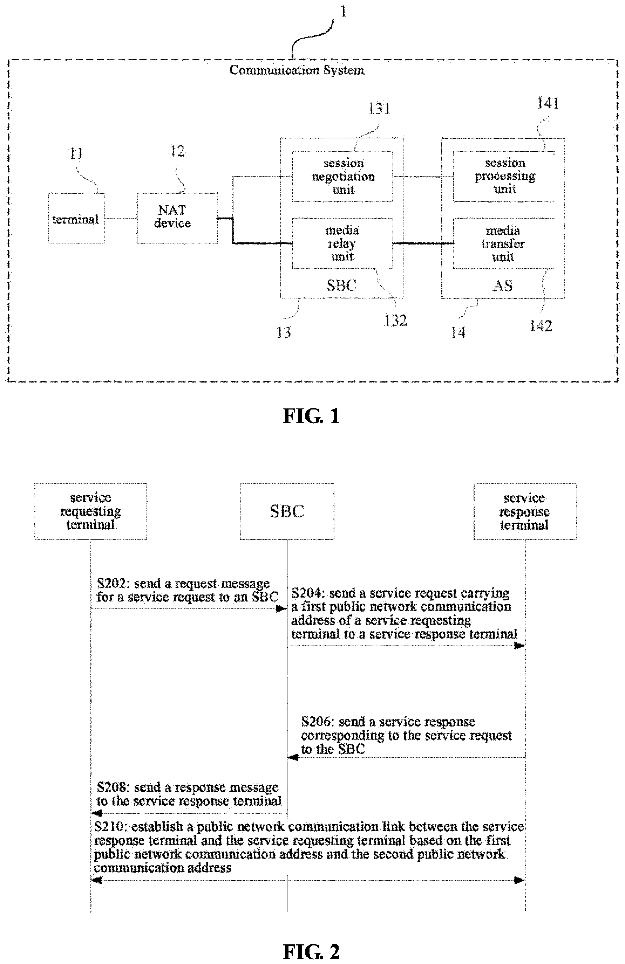

In the related technologies, the multimedia service data in the RCS needs to be relayed through the SBC for transmission. With reference to the schematic structural diagram of a communication system provided in the related technologies shown in Fig. 1, the communication system 1 includes a terminal 11, a NAT device 12, an SBC 13 and an AS 14. The terminal 11 is in communication with the NAT device 12, and the NAT device 12 is in communication with the SBC 13 which is also in communication with the AS 14.

In an embodiment, the terminal 11 is responsible for initiating a request or making a response to a service request upon receipt of the service request, so the terminal 11, either at the session negotiation stage (or "session connection stage") or at the service data transmission stage (or "media connection stage"), always uses its own private network Internet Protocol (IP) address.

The NAT device 12 is configured to translate the private network IP address in a message from the terminal into a public network IP address, so as to complete the communication with the SBC 13 and the AS 14. Meanwhile, the NAT device 12 is further configured to forward the message from a public network side to the terminal 11. Network address translation, which belongs to a Wide Area Network (WAN) access technology, is a translation technology that translates private (reserved) addresses into authorized IP addresses. It is responsible for implementing translation between private network IP addresses and public network IP addresses, and forwarding private and public network data flows.

The SBC 13 in the communication system 1 includes a session negotiation unit 131 and a media relay unit 132. In an embodiment, the session negotiation unit 131 is responsible for authenticating the access and session of the terminal, and sending a service request or service response from the terminal to the AS 14. The media relay unit 132 is configured to receive service data from the AS 14 and send the received data to the terminal 11, or to receive service data from the terminal 11 and send the received data to the AS 14.

The AS 14 includes a session processing unit 141 and a media transfer unit 142. In an embodiment, the session processing unit 141 is configured to receive the service request or service response forwarded by the terminal 11 through the SBC 13, to implement session negotiation with the terminal 11. After the session negotiation stage, the session processing unit 141 further transmits an IP address obtained through negotiation to the media transfer unit 142. The media transfer unit 142 is configured to implement media service data interaction with the terminal 11 with the aid of the SBC 13 and the NAT device 12.

In the related technologies, the NAT device 12 and the SBC 13 in the communication system 1 are in communication based on the public network IP address, while the SBC 13 and the AS 14 are in communication based on the private network IP address. Therefore, when relaying a session negotiation message (the service request or service response) between the AS 14 and the terminal 11, the session negotiation unit 131 of the SBC 13 requires translation between the private network IP address and the public network IP address. For example, upon receipt of a service response that the AS 14 needs to send to the terminal, the session negotiation unit 131 needs to translate the private network IP address of the AS in the service request into the public network IP address of the SBC 13, and then send the translated service response to the NAT device 12, so that the NAT device 12 may send the service response to the terminal 11. Correspondingly, if the session negotiation unit 131 receives the service request of the terminal 11 forwarded by the NAT device 12, as the SBC 13 is in communication with the NAT device 12 based on public network IP address, the service request carries the public network IP address translated by the NAT device 12, and the SBC 13 is in communication with the AS 14 based on the private network IP address. Therefore, the session negotiation unit 131 may send the service request to the AS 14 only after translating the public network IP address of the NAT device 12 carried in the service request into the private network IP address of the SBC.

Similarly, the media relay unit 132 also needs to translate the public network IP address into the private network IP address when relaying the media service data between the AS 14 and the terminal 11. The translation example is similar to the translation of the session negotiation unit 131 at the session negotiation stage, which will not be repeated in the present application.

In related technologies, the SBC 13 may implement NAT traversal and authorized status verification of media addresses by relaying session negotiation messages and media service data, so that the public network IP address of the AS 14 may be avoided from being disclosed directly to the public, thus improving the security of the AS 14. However, the SBC 13 is bound to take a certain amount of processing time when relaying the media service data, which leads to the problem of long delay in service data transmission and poor service experience of users.

To solve the problems caused by relaying the service data between the terminal and the AS through the SBC in related technologies, this embodiment provides a service implementation scheme, which includes a service requesting method, a service negotiation method and a service response method. Fig. 2 shows an interaction flow chart of a service requesting terminal, a service response terminal and the SBC in the service implementation scheme.

Before describing the process of implementing the service in this embodiment, the service requesting terminal and the service response terminal are described in this embodiment. In the actual service process, if some services are initiated by the terminal, the terminal serves as the service requesting terminal and the AS serves as the service response terminal. Of course, there are other services initiated by the AS. In this case, the application server serves as the service requesting terminal and the terminal serves as the service response terminal.

The service requesting terminal includes a private network communication address and a public network communication address. Similarly, the service response terminal also includes a private network communication address and a public network communication address. In this embodiment, to distinguish the public network communication address of the service requesting terminal from that of the service response terminal, the public network communication address of the service requesting terminal is referred to as the "first public network communication address" and the public network communication address of the service response terminal is referred to as the "second public network communication address". The present application distinguishes two public network communication addresses for description purposes only, and is not used to limit the scope of this embodiment. In an embodiment, the public network communication address at the terminal side may refer to the public network communication address of the NAT device.

In a step of S202, the service requesting terminal sends a request message for the service request to the SBC.

In this embodiment, when the service requesting terminal needs to request a certain service from the service response terminal, it may generate a request message and then send the request message to the SBC. The SBC sends a service request to the service response terminal based on the request message from the service requesting terminal. The service request sent by the SBC to the service response terminal carries the first public network communication address of the service requesting terminal.

In a step of S204, the SBC sends a service request carrying the first public network communication address of the service requesting terminal to the service response terminal based on the request from the service requesting terminal.

In an embodiment, the service request sent by the SBC to the service response terminal is generated based on the request message received from the service requesting terminal, and the service request carries the first public network communication address of the service requesting terminal, so that, in some examples of this embodiment, the request message sent by the service requesting terminal to the SBC may carry the first public network communication address, and directly send the request message to the service response terminal as the service request. For example, in some examples of this embodiment, the service requesting terminal is the AS and the service response terminal is the terminal. When the AS requests the terminal to start a certain service, it will carry its own public network IP address in a request message sent to the SBC. Upon receipt of the request message from the AS, the SBC may directly send the request message to the terminal as the service request without modifying the public network IP address in the request message.

In other examples of this embodiment, the request message sent by the service requesting terminal to the SBC carries the private network communication address of the service requesting terminal. The SBC needs to generate a service request based on the first public network communication address of the service requesting terminal and the request message, such as by modifying the private network communication address in the request message into the first public network communication address to generate a service request, and then send the service request to the service response terminal. For example, in some examples of this embodiment, the AS serves as the service requesting terminal and terminal serves as the service response terminal. When the AS sends a request message to SBC, it carries its private network IP address. Upon receipt of the request message, the SBC needs to modify the private network IP address of the AS into the public network IP address of the AS, and then send the modified request message to the terminal as the service request. For another example, when the terminal serves as the service requesting terminal and the AS serves as the service response terminal, the request message sent by the terminal to the SBC through the NAT device also carries the private network IP address of the terminal. When the SBC receives the request message from the terminal, it modifies the private network communication address in the request message into the public network IP address at the terminal side, so as to obtain the service request.

In a step of S206, the service response terminal sends a service response corresponding to the service request to the SBC.

Upon receipt of the service request, the service response terminal may make a response to the request from the service requesting terminal based on the service request, so the service response terminal will send a service response to the service requesting terminal based on the service request. The service response terminal sends the service response to the SBC, and the SBC sends a response message carrying the second public network communication address of the service response terminal to the service requesting terminal based on the service response.

In a step of S208, the SBC sends a response message carrying the second public network communication address of the service response terminal to the service requesting terminal based on the response from the service response terminal.

Similar to the SBC sending the service request to the service response terminal based on the request from the service requesting terminal, in this embodiment, the response message sent by the SBC to the service requesting terminal is generated based on the service response received from the service response terminal, and carries the second public network communication address of the service response terminal. Therefore, in some examples of this embodiment, the service response sent by the service response terminal to the SBC may carry the second public network communication address, and the SBC may directly send the service response to the service requesting terminal as the response message. For example, in some examples of this embodiment, the service response terminal is the AS, and the service requesting terminal is the terminal. When the AS sends the service response based on the request from the terminal, it may carry its own public network communication address in the service response. Upon receipt of the service response carrying the public network communication address of the AS, the SBC may send the service response as a response message corresponding to the request message directly to the terminal without modifying the public network IP address in the service response.

In other examples of this embodiment, the service response sent by the service response terminal to the SBC carries the private network communication address of the service response terminal, and the SBC needs to generate a response message based on the second public network communication address of the service response terminal and the service response, optionally, by modifying the private network communication address in the service response into the second public network communication address, and then send the response message to the service requesting terminal as a response to the request message sent by the service requesting terminal. For example, in some examples of this embodiment, the AS serves as the service response terminal and the terminal serves as the service requesting terminal. When the AS sends the service response to the SBC, it carries its private network IP address. Upon receipt of the service response, the SBC needs to modify the private network IP address of the AS into the public network IP address of the AS, and then send the modified service response to the terminal as a response message. For another example, when the terminal serves as the service response terminal and the AS serves as the service requesting terminal, the terminal sends a service response to the SBC through the NAT device, and the service response also carries the private network IP address of the terminal. Upon receipt of the service response from the terminal, the SBC modifies the private network communication address in the service response into the public network IP address at the terminal side, so as to obtain a response message that may be sent to the AS side.

In some examples of this embodiment, the response message sent by the SBC to the terminal also includes a port number of the AS.

In a step of S210, the service response terminal and the service requesting terminal establish a public network communication link based on the first public network communication address and the second public network communication address.

At the session negotiation stage, the service response terminal may obtain the first public network communication address of the service requesting terminal based on the service request sent by the SBC to the service response terminal. The service requesting terminal may obtain the second public network communication address of the service response terminal based on the response message sent by the SBC to the service requesting terminal. On this basis, the service requesting terminal and the service response terminal may establish a public network communication link between the service requesting terminal and the service response terminal based on the first public network communication address and the second public network communication address. The public network communication link is a communication link established based on the public network communication addresses, through which the service data may be transmitted between the service requesting terminal and the service response terminal to implement the service without being relayed through the SBC.

A process of establishing a public network communication link between the service response terminal and the service requesting terminal is briefly described below.

In an embodiment, in the process of establishing a public network communication link, a link establishment request may be initiated by the service requesting terminal or the service response terminal. For example, in one example of this embodiment, the link establishment request is initiated by the service requesting terminal. The service requesting terminal is actually a link establishment request terminal, and the service response terminal is a link establishment response terminal. The service requesting terminal sends the link establishment request to the service response terminal based on the second public network communication address obtained during session negotiation. Upon receipt of the link establishment request, the service response terminal may send a link establishment response to the service requesting terminal based on the first public network communication address obtained at the session negotiation stage, thereby establishing a public network communication link with the service requesting terminal. In another example of this embodiment, the link establishment request is initiated by the service response terminal to the service requesting terminal. The service requesting terminal serves as the link establishment request terminal and the service requesting terminal serves as the link establishment response terminal. The service response terminal sends the link establishment request to the service requesting terminal based on the first public network communication address obtained during session negotiation. If the service requesting terminal agrees to establish a communication link based on the public network upon receipt of the link establishment request, it may send a link establishment response representing affirmation to the service response terminal. If it does not agree to establish a communication link based on the public network, the service requesting terminal may reject the link establishment request.

In some examples of this embodiment, upon receipt of the link establishment request sent by the link establishment request terminal, the link establishment response terminal may verify the link establishment request terminal, and allow the link establishment request terminal to establish a public network communication link therewith only after determining that the link establishment request terminal is a device with which it has previously performed session negotiation. In an embodiment, the link establishment response terminal may verify the authorized status of the link establishment request terminal by verifying the public network communication address of the link establishment request terminal. When the link establishment request terminal initiates a link establishment request to the link establishment response terminal, it may carry its own public network communication address in the link establishment request. Upon receipt of the link establishment request, the link establishment response terminal determines whether the public network communication address carried in the link establishment request is the public network communication address obtained thereby at the session negotiation stage. In an embodiment, assuming that the link establishment request terminal is the service requesting terminal, the link establishment request sent by the link establishment request terminal carries the first public network communication address. Upon receipt of the link establishment request, the link establishment response terminal may compare the public network communication address carried in the link establishment request with the first public network communication address of the service requesting terminal obtained thereby during session negotiation, and determine whether the public network communication address carried in the link establishment request is consistent with the first public network communication address of the service requesting terminal. If the public network communication address carried in the link establishment request is consistent with the first public network communication address of the service requesting terminal, it indicates that the link establishment request is initiated by the service requesting terminal with which it has previously performed session negotiation, so the status of the link establishment request terminal is authorized, and the link establishment response terminal may initiate a link establishment response representing affirmation, thus establishing a public network communication link with the link establishment request terminal. If the public network communication address carried in the link establishment request is inconsistent with the first public network communication address of the service requesting terminal, it indicates that the link establishment request terminal initiating the link establishment request is not the service requesting terminal, so the service response terminal as the link establishment response terminal may reject the link establishment request of the link establishment request terminal.

Assuming that the link establishment request terminal is the service response terminal, while the link establishment response terminal is the service requesting terminal. As a link establishment request terminal, the service response terminal may carry its own public network communication address, i.e., the second public network communication address, when sending the link establishment request to the link establishment response terminal. Upon receipt of the link establishment request, the link establishment response terminal compares the public network communication address in the link establishment request with the second public network communication address obtained thereby from the service response terminal at the session negotiation stage. If the public network communication address carried in the link establishment request is consistent with the second public network communication address of the service response terminal, it indicates that the link establishment request terminal is the service response terminal with which it has performed session negotiation. Therefore, as a link establishment response terminal, the service requesting terminal may send a link establishment response representing agreement to the link establishment request terminal based on the second public network communication address obtained in advance, establish a public network communication link with the link establishment request terminal, and then transmit service data through the communication link. If the link establishment response terminal finds through comparison that the public network communication address carried in the link establishment request received is not the second public network communication address, it indicates that the status of the link establishment requesting terminal is unauthorized, so the link establishment response terminal may reject the link establishment request of the link establishment requesting terminal.

In some examples of this embodiment, the service requesting terminal is the terminal. In other examples of this embodiment, the service requesting terminal is the AS. Considering that the terminals usually implement external communication through the NAT device in the communication system, it may not be easy for external devices to actively initiate communication with the terminal. Therefore, in this embodiment, the link establishment request may be initiated by the terminal to the AS, that is, the terminal serves as the link establishment request terminal and the AS serves as the link establishment response terminal. Therefore, when the terminal is the service requesting terminal, the link establishment request is sent from the service requesting terminal to the service response terminal, and when the terminal is the service response terminal, the link establishment request is sent from the service response terminal to the service requesting terminal.

According to the methods for service requesting, service negotiation and service response provided in this embodiment, at the session negotiation stage, the service request carrying the first public network communication address of the service requesting terminal is sent to the service response terminal, and the response message carrying the second public network communication address of the service response terminal is sent to the service requesting terminal based on the response of the service response terminal, so that the service requesting terminal and the service response terminal may obtain the public network communication addresses of each other. Based on the two public network communication addresses, the public network communication link is established between the service requesting terminal and the service response terminal for the service data transmission to implement the service, thus avoiding the problems of low service data transmission rate and long delay in data transmission caused by relaying the service data through the SBC for transmission, and improving the service experience of users at the terminal side.

### Embodiment Two

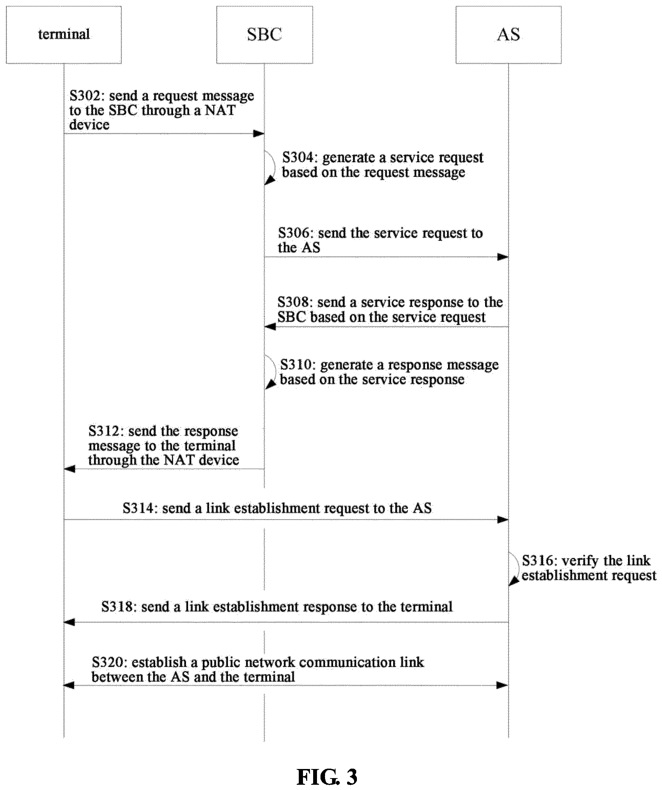

This embodiment describes the service implementation scheme on the basis of Embodiment One. It is assumed that the terminal is the service requesting terminal and the AS is the service response terminal in this embodiment. For example, it is assumed that the terminal needs to upload video data to the AS. Meanwhile, it is assumed that the message sent by the AS to the SBC still carries the private network communication address of the AS, with reference to an interaction flow chart of a service implementation scheme shown in Fig. 3.

In a step of S302, the terminal sends a request message to the SBC through a NAT device.

As the terminal needs to upload video data to the AS, the terminal may initiate a video data upload request to the AS. The request message may carry the type of service requested by the terminal.

In this embodiment, the terminal implements external communication through the NAT device, and the request message sent by the terminal to the NAT device carries the private network communication address of the terminal. A source address of the request message is the private network communication address of the terminal, and a destination address thereof is the public network communication address of the SBC. Upon receipt of the request message, the NAT device will translate the source address in the request message and modify the source address into the public network communication address of the NAT device. In this embodiment, the public network communication address of the NAT device may be regarded as the public network communication address of the terminal. In this embodiment, the terminal serves as the service requesting terminal, so the public network communication address of the NAT device is actually the first public network communication address.

Upon completion of the translation from the private network address to the public network address, the NAT device may send the translated request message to the destination address, that is, to the SBC.

In a step of S304, the SBC generates a service request based on the request message.

Upon receipt of the request message forwarded by the NAT device, the SBC may generate a service request based on the request message. The service request generated by the SBC carries the public network communication address, i.e., the first public network communication address, at the terminal side. In an embodiment, the SBC may modify the private network communication address of the terminal in the request message to the first public network communication address at the terminal side, so as to obtain the service request.

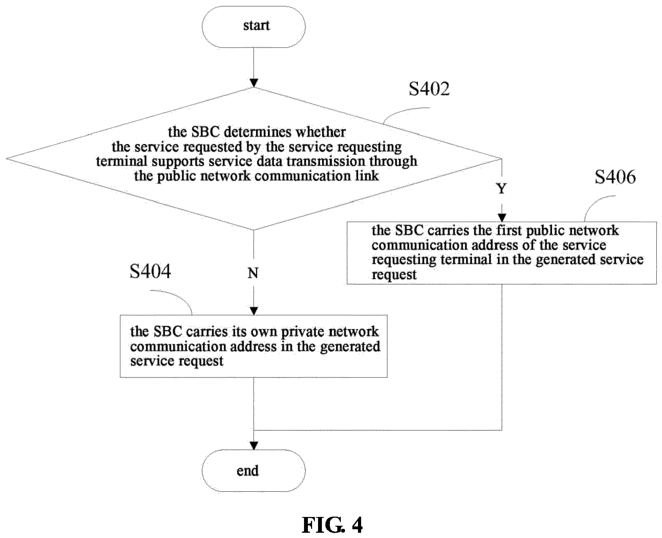

In some examples of this embodiment, it is not necessary to establish a public network communication link between the terminal and the AS for all services requested by the terminal. For example, in some cases, the AS does not want to disclose its own public network communication address for some services requested by the terminal. Therefore, this embodiment provides a process of the SBC generating a service request for reference, as shown in Fig. 4.

In a step of S402, the SBC determines whether the service requested by the service requesting terminal supports service data transmission through the public network communication link.

When the service requested by the service requesting terminal supports service data transmission through the public network communication link, a step S404 is performed. When the service requested by the service requesting terminal does not support service data transmission through the public network communication link, a step S406 is performed.

In this embodiment, the SBC may determine whether the service requested by the service request supports transmission through the public network communication link based on a message body of the request message. For example, in this embodiment, when the terminal requests to upload video data, it may carry the requested service type in the message body, and the SBC determines whether the requested service supports service data transmission through the public network communication link based on the service type in the message body.

In other examples of this embodiment, the SBC may determine whether the service requested by the service requesting terminal supports service data transmission through the public network communication link based on a message header of the request message. In an embodiment, corresponding indication information should exist in the message header of the request message sent by the service requesting terminal to the SBC. For example, the message header of the request message includes a service indication. The service indication is "0", indicating that the service requested by the service requesting terminal supports transmission based on the public network communication address. The service indication is "1", indicating that the service requested by the service requesting terminal does not support service data transmission based on the public network communication address. In an embodiment, before sending the request message, the service requesting terminal may determine whether the service supports service data transmission through the public network communication link based on the type of service requested thereby, that is, whether the service supports direct media connection. The service requesting terminal then configures the message header of the request message based on the result.

In some other examples of this embodiment, the SBC may determine whether the service requested by the service requesting terminal supports service data transmission through the public network communication link by combining the message header and message body of the request message. For example, the SBC determines that the service requested by the service requesting terminal supports service data transmission through the public network communication link only when the judgment results obtained by using both the message header and the message body of the request message indicate that the service requested by the service requesting terminal supports direct media connection.

In a step of S404, the SBC carries the first public network communication address of the service requesting terminal in the generated service request.

If the SBC determines through judgment that the service requested by the service requesting terminal supports service data transmission through the public network communication link, it needs to generate a service request carrying the first public network communication address of the service requesting terminal.

In a step of S406, the SBC carries its own private network communication address in the generated service request.

If the SBC determines through judgment that the service requested by the service requesting terminal does not support the service data transmission through the public network communication link, it may determine that the service data corresponding to the service will still be transmitted in the same mode as in the related technologies, that is, by relaying through the SBC. Since the SBC and the AS are in communication based on the private network communication address, the SBC needs to carry its own private network communication address in the generated service request.

In a step of S306, the SBC sends the service request to the AS.

After generating a service request, the SBC may send the service request to the AS. In an embodiment, in communication with the AS, the SBC may relay the data through a Call Session Control Function (CSCF) network element. For example, the SBC first sends the service request to the CSCF network element, and then the CSCF network element forwards the service request to the AS. Of course, the communication mode between the SBC and the AS is not limited to the modes shown in the examples of the present application.

In a step of S308, the AS sends a service response to the SBC based on the service request.

Upon receipt of the service request from the SBC, the AS may send the service response based on the service request, allowing the SBC to send a response message corresponding to the request message to the terminal based on its own response.

In this embodiment, at the session negotiation stage, the AS is indifferent to whether the service requested by the terminal supports service data transmission through the public network communication link or not, so no matter what type of service the terminal requests, the AS always carries its own private network communication address when sending the service response to the SBC.

After generating the service response, the AS sends the service response carrying its own private network communication address to the SBC. In an embodiment, a transmission route of the service response corresponds to that of the service request, so the service response may be sent to the SBC through the CSCF network element in some examples of this embodiment.

In a step of S310, the SBC generates a response message based on the service response.

Upon receipt of the service response from the AS, the SBC generates a response message to be sent to the terminal based on the service response. The response message carries the public network communication address, i.e., the second public network communication address, at the AS side.

In an embodiment, if not all service data of the services are supported to be transmitted through the public network communication link, the SBC needs to determine whether the service corresponding to the service response supports the transmission through the public network communication link before generating the response message. In an embodiment, if the SBC directly determines that the service response it receives from the AS is for the service request sent previously, it may determine how to modify the private network communication address in the service response based on whether the service requested by the service request supports transmission through the public network communication link.

In other examples of this embodiment, the SBC may also make a determination based on the message header and/or message body of the response message. Refer to the process of the SBC generating service request for mode of determination, which will not be repeated herein.

If it is determined by the SBC that the service corresponding to the service response supports direct media connection, the SBC may modify the private network communication address at the AS side in the service response, and modify the private network communication address at the AS side into the public network communication address at the AS side, so as to obtain a response message. If it is determined by the SBC that the service corresponding to the service response does not support direct media connection, the SBC may modify the private network communication address in the service response to its own public network communication address to generate a response message.

In a step of S312, the SBC sends the response message to the terminal through the NAT device.

After generating the response message, the SBC may transmit the response message to the NAT device, allowing the NAT device to transmit the response message to the terminal based on the private network communication address of the terminal.

In a step of S314, the terminal sends a link establishment request to the AS.

Upon receipt of the response message, the terminal may send a link establishment request to the AS based on the public network communication address carried in the response message if it determines that the AS agrees to make a response to its request message. In an embodiment, when the terminal sends a link establishment request to the AS, it also needs to translate the private network communication address into the public network communication address through the NAT device, and then send the translated request to the AS. In this embodiment, the link establishment request sent by the terminal carries the public network communication address at the terminal side.

In a step of S316, the AS verifies the link establishment request.

Upon receipt of the link establishment request sent by the terminal side, the AS may verify the status of the link establishment request terminal based on the link establishment request, and determine whether the service requesting terminal that sends the link establishment request is the service requesting terminal with which it has previously performed session negotiation. In an embodiment, the AS may determine whether the public network communication address carried in the link establishment request is the public network communication address, i.e., the first public network communication address, at the terminal side obtained thereby at the session negotiation stage.

Under the condition of determining that the public network communication address in the link establishment request is the first public network communication address, the AS determines that the status of the link establishment request terminal is authorized.

In other examples of this embodiment, the AS authenticates the status of the link establishment request terminal based on the public network communication address in the link establishment request, and also based on the private network communication address of the link establishment request terminal in the link establishment request. In an embodiment, when the SBC sends a service request to the AS based on the request message from the terminal, the service request also carries the private network communication address of the terminal. In this way, upon receipt of the link establishment request, the AS may authenticate not only the public network communication address in the link establishment request, but also the private network communication address in the link establishment request to determine whether the private network communication address in the link establishment request is the private network communication address carried in the service request. If the AS determines that the public network communication address and the private network communication address in the link establishment request are consistent with those in the service request, it may confirm that the link establishment request terminal is the service requesting terminal.

In a step of S318, the AS sends a link establishment response to the terminal.

When determining that the link establishment request is initiated by the previous service requesting terminal, the AS may send a link establishment response representing affirmation to the terminal.

In a step of S320, the AS establishes a public network communication link with the terminal.

Upon receipt of the link establishment response, the terminal may establish a public network communication link with the AS based on the second public network communication address, and then transmit video data to the AS through the communication link to implement the corresponding data transmission service.

According to the service implementation scheme provided in this embodiment, the terminal and the AS may establish a communication link for service data transmission through the public network communication addresses thereof obtained at the session negotiation stage, so as to avoid the problem that the service data is required to be relayed through the SBC before transmission. Furthermore, before sending the service request to the AS or the response message to the terminal, the SBC may determine whether the service requested by the service requesting terminal supports direct media connection to determine whether to carry the public network communication address of the service requesting terminal or the public network communication address of the service response terminal, so that some services may be transmitted through the public network communication link, while other services may continue to be implemented by schemes in the related technologies, which may be compatible with solutions in related technologies while improving user experience.

In the service implementation scheme provided in this embodiment, upon receipt of the link establishment request, the AS may verify the status of the link establishment request terminal, so as to ensure that the link establishment request terminal with which it establishes the public network communication link is the terminal with which it has previously performed session negotiation, thus improving its security.

Although Embodiment Two only describes the service implementation scheme in which the terminal serves as the service requesting terminal and the AS serves as the service response terminal, the implementation principle of the scheme in Embodiment Two is also applicable to the scenario where the terminal serves as the service response terminal to receive the request from the AS.

### Embodiment Three

This embodiment also describes the service implementation scheme on the basis of the Embodiment One. Here, it is assumed that the service requesting terminal is the AS and the terminal is the service response terminal. For example, the AS requests the terminal to receive its push message. At the same time, when sending the message to the SBC, the AS may choose to carry its own public network address or its own private network address according to the actual situation.

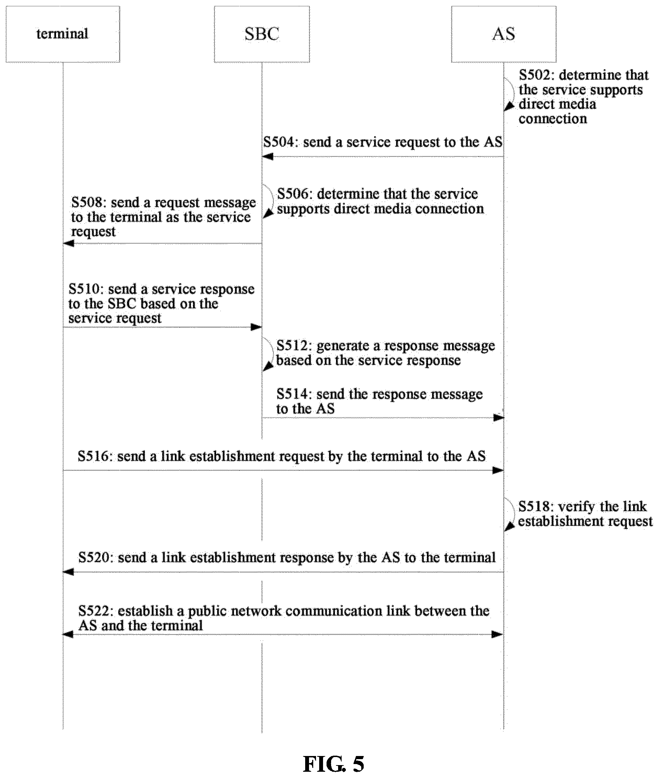

Refer to the interaction flow chart of a service implementation scheme shown in Fig. 5.

In a step of S502, the AS determines that the service to be requested supports service data transmission through the public network communication link.

In this embodiment, when the AS needs to initiate a request to the terminal, it will first determine whether the service it is currently requesting supports service data transmission through the public network communication link, that is, whether the service it is currently requesting supports the direct media connection. If so, the AS will carry its own public network communication address in the generated request information. Since the AS is the service requesting terminal in this embodiment, the public network communication address of the AS is the first public network communication address.

In an embodiment, if the AS determines through judgment that the service it is currently requesting does not support service transmission through the public network communication link, it indicates that the service data of the service still needs to be relayed through the SBC. Therefore, the AS adds its own private network communication address to the request message when generating the request message.

In a step of S504, the AS sends a request message to the SBC.

The AS generates a request message and sends the request message to the SBC. In an embodiment, the AS and SBC may be in communication through the CSCF network element, that is, the AS sends the request message to the CSCF network element, and then the CSCF network element sends the request message to the SBC. In some other examples, the communication mode between AS and SBC may be different from the above modes.

In a step of S506, the SBC determines that the service requested by the AS supports service data transmission through the public network communication link.

Upon receipt of the request message sent by the AS, the SBC needs to generate a service request based on the request message. In this embodiment, the SBC also needs to determine whether the service requested by the AS supports service data transmission or not through the public network communication link. If so, the SBC may obtain the service request carrying the public network communication address of the AS, i.e., the first public network communication address, without modifying the communication address in the request message. If not, the SBC needs to modify the service request carrying the private communication address of the AS sent by AS, and may obtain the service request only after modifying the private network address of the AS in the service request into the public network address of the SBC.

In an embodiment, when determining whether the service requested by AS supports direct media connection, the SBC may determine based on the message body of the request message. The message body contains the type of service requested by the AS, so the SBC determines whether the service supports direct media connection based on the type of service requested. Of course, since the AS also needs to determine whether the service requested thereby supports direct media connection service when sending the request message, in one example of this embodiment, the AS, after obtaining a judgment result, may carry the judgment result in the request message and send it to the SBC. In this way, upon receipt of the request message, the SBC may directly determine whether the service requested by the AS supports direct media connection based on the received request message, thus avoiding the SBC from making a judgment based on the service type in the request message. For example, the message header of the request message sent by the AS to the SBC includes a service indication. The value of the service indication is "0", indicating that the service requested by the request message supports the direct media connection service. The value of the service indication is not "0", indicating that the service requested by the request message does not support the direct media connection service.

In a step of S508, the SBC sends the request message to the terminal as the service request.

Assuming that the SBC determines that the service requested by the request message supports the direct media connection service, the SBC may send the request message carrying the public network communication address of the AS to the terminal as the service request. If the SBC determines that the service requested by the request message does not support the direct media connection service, the SBC may send the service request carrying its own public network communication address to the terminal.

In a step of S510, the terminal sends a service response to the SBC based on the service request received.

Upon receipt of the service request through the NAT device, the terminal may send a service response to the SBC based on the service request. The service response carries the private network communication address of the terminal. In an embodiment, the service response needs to be sent to the SBC through the NAT device. Upon receipt of the service response, the NAT device may modify a source address of the service response from the private network communication address of the terminal to its own public network communication address, thus translating the private network communication address into the public network communication address. Since the terminal serves as the service response terminal in this embodiment, the public network communication address of the NAT device may actually be regarded as the public network communication address, i.e., the second public network communication address, of the terminal.

In a step of S512, the SBC generates a response message based on the service response.

Upon receipt of the service response from the terminal, SBC may generate a response message carrying the second public network communication address at the terminal side based on the service response. In this example, as the service requested by the AS supports the direct media connection, the SBC will carry the second public network communication address of the terminal in the response message. In other examples of this embodiment, if the service requested by the AS does not support the direct media connection, the SBC needs to carry its own private network communication address in the response message.

In addition, in this embodiment, if the SBC can determine which service request the service response belongs to upon receipt of the service response from the terminal side, it may directly determine whether the service corresponding to the service response supports direct media connection based on the service request. However, if SBC cannot determine which service request the received service response corresponds to, it needs to determine whether the service corresponding to the service response supports the direct media connection based on the message header and/or message body when generating a response message based on the service response, so as to determine whether the corresponding response message carries the second public network communication address at the terminal side or the private network communication address of the SBC.

In a step of S514, the SBC sends the response message to the AS.

After the SBC generates the response message, it may send the response message to the AS through the CSCF network element, so that the AS may determine whether the terminal accepts its request based on the response message. After the AS determines that the terminal has made a characterization-positive response representing affirmation to its service request, it may establish a public network communication link with the terminal upon receipt of the response message.

In a step of S516, the terminal sends a link establishment request to the AS.

After the response from the terminal arrives at the AS side, the terminal may send a link establishment request to the AS based on the first public network communication address carried in the service request, that is, the public network communication address at the AS side. In an embodiment, when the terminal sends a link establishment request to the AS, it also needs to translate the private network communication address into the public network communication address through the NAT device, and then to send the translated request to the AS.

In a step of S518, the AS verifies the link establishment request.

Upon receipt of the link establishment request sent by the terminal side, the AS may verify the status of the link establishment request terminal based on the link establishment request, and determine whether the terminal that sends the link establishment request is the service response terminal with which it has previously performed session negotiation. In an embodiment, the AS may determine whether the public network communication address carried in the link establishment request is the public network communication address, i.e., the second public network communication address, at the terminal side obtained thereby at the session negotiation stage.

Under the condition of determining that the public network communication address in the link establishment request is the second public network communication address, the AS determines that the status of the link establishment request terminal is authorized.

In other examples of this embodiment, the AS authenticates the status of the link establishment request terminal based on the public network communication address in the link establishment request, and also based on the private network communication address of the link establishment request terminal in the link establishment request. In an embodiment, when the SBC sends the response message to the AS based on the service response from the terminal, the response message also carries the private network communication address of the terminal. In this way, upon receipt of the link establishment request, the AS may authenticate not only the public network communication address in the link establishment request, but also the private network communication address in the link establishment request to determine whether the private network communication address in the link establishment request is the private network communication address carried in the response message. If the AS determines that the public network communication address and the private network communication address in the link establishment request are consistent with those in the response message, it may confirm that the link establishment request terminal is the service response terminal.

In a step of S520, the AS sends a link establishment response to the terminal.

When determining that the link establishment request is initiated by the previous service response terminal, the AS may send a link establishment response representing affirmation to the terminal.

In a step of S522, the AS establishes a public network communication link with the terminal.

Upon receipt of the link establishment response, the terminal may establish a public network communication link with the AS based on the first public network communication address, and then receive a push message of the AS through the communication link to implement the corresponding data transmission service.

According to the service implementation scheme provided by the embodiment of the present application, the terminal and the AS may obtain the public network communication addresses thereof at the session negotiation stage to establish a communication link for service data transmission, thereby avoiding the problem that the service data is required to be relayed through the SBC before transmission. In the service implementation scheme provided in this embodiment, upon receipt of the link establishment request, the AS may verify the status of the link establishment request terminal, so as to ensure that the with which it establishes the public network communication link is the terminal with which it has previously performed session negotiation, thus improving its security.

Although Embodiment Three only describes the service implementation scheme in which the AS serves as the service requesting terminal and the terminal serves as the service response terminal, the implementation principle of the scheme in Embodiment Three is also applicable to the scenario where the AS serves as the service response terminal to receive the request from the terminal.

### Embodiment Four

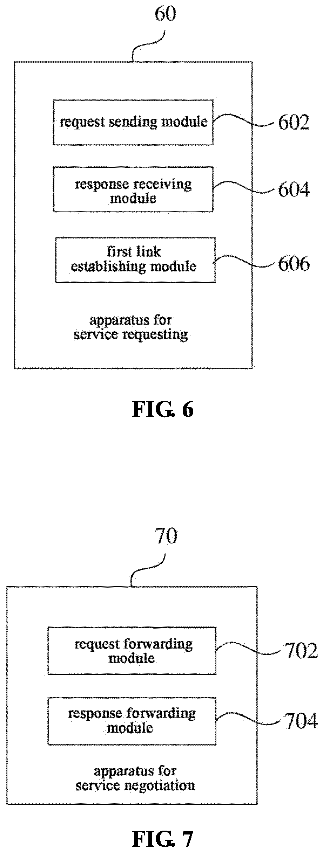

This embodiment provides a service requesting apparatus, a service negotiation apparatus and a service response apparatus, with reference to schematic structural diagrams of the apparatuses shown in Figs. 6 - 8, respectively.

First, with reference to the schematic structural diagram of the service requesting apparatus 60 shown in Fig. 6, the service requesting apparatus 60 includes a request sending module 602, a response receiving module 604 and a first link establishing module 606. In an embodiment, the request sending module 602 is configured to send a request message for a service request to a SBC. The response receiving module 604 is configured to receive a response message sent by a service response terminal through the SBC upon receipt of the service request. The first link establishing module 606 is configured to establish a public network communication link with the service response terminal based on a second public network communication address, and transmit service data through the public network communication link to implement the service. In an embodiment, after sending the request message to the SBC, the request sending module 602 may enable the SBC to send a service request carrying a first public network communication address at the service requesting apparatus 60 side to the service response terminal based on the request message. The response message received by the response receiving module 604 includes the second public network communication address of the service response terminal.

Fig. 7 shows a service negotiation apparatus 70, including a request forwarding module 702 and a response forwarding module 704. In an embodiment, the request forwarding module 702 is configured to send a service request carrying the first public network communication address of a service requesting terminal to the service response terminal based on the request from the service requesting terminal, and the response forwarding module 704 is configured to send a response message to the service requesting terminal based on the response from the service response terminal.

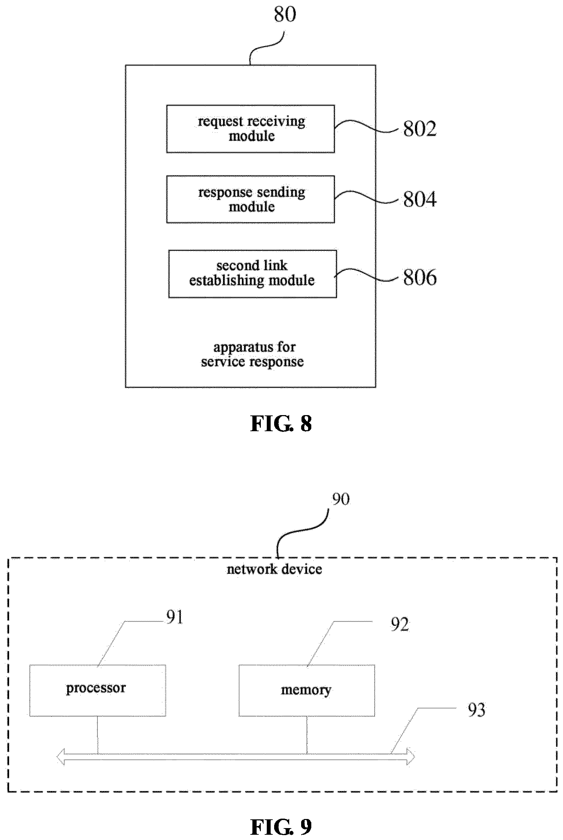

Fig. 8 is a schematic structural diagram of the service response apparatus 80, including a request receiving module 802, a response sending module 804 and a second link establishing module 806. In an embodiment, the request receiving module 802 is configured to receive the service request sent by the SBC, where the service request includes the first public network communication address of the service requesting terminal. The response sending module 804 is configured to send a service response corresponding to the service request to the SBC, where the service response is configured to instruct the SBC to send a response message carrying the second public network communication address of the terminal to the service requesting terminal. The second link establishing module 806 is configured to establish a public network communication link with the service requesting terminal based the first public network communication address for service data transmission, thus implementing the service.

In this embodiment, the service requesting apparatus 60 may be deployed on a terminal or an AS. The functions of the request sending module 602, the response receiving module 604 and the first link establishing module 606 in the service requesting apparatus 60 may be implemented by controlling a communication unit of the terminal through a processor of the terminal, or by a processor and a communication unit of the AS.

The service negotiation apparatus 70 may be deployed on the SBC. In an embodiment, the functions of the request forwarding module 702 and the response forwarding module 704 may be implemented by a processor and a communication unit of the SBC.

Similar to the service requesting apparatus 60, the service response apparatus 80 may also be deployed on the terminal or the AS. The functions of the request receiving module 802, the response sending module 804 and the second link establishing module 806 may be implemented by controlling the communication unit of the terminal through the processor of the terminal, or by the processor and the communication unit of the AS.

In this embodiment, the request sending module 602 may generate a request message and send the request message to the SBC when it needs to request a certain service from the service response terminal. The SBC sends a service request to the service response terminal based on the request message from the service requesting terminal. The service request sent by the SBC to the service response terminal carries the first public network communication address of the service requesting terminal.

After the SBC sends the service request to the service response terminal, the service response terminal will feed the service response back to the SBC. Upon receipt of the service response, the SBC may send a response message to the service requesting apparatus 60 based on the service response, and the response receiving module 604 may receive the response message carrying the second public network communication address of the service response terminal sent by the SBC. Then, the first link establishing module 606 may perform link establishment interaction with the service response terminal based on the second public network communication address, and establish a public network communication link.

The request forwarding module 702 of the service negotiation apparatus 70 sends a service request carrying the first public network communication address of the service requesting apparatus 60 to the service response apparatus 80 based on the request from the service requesting apparatus 60.

In an embodiment, the service request sent by the request forwarding module 702 to the service response apparatus 80 is generated based on the request message received from the service requesting apparatus 60, and carries the first public network communication address of the service requesting apparatus 60. Therefore, in some examples of this embodiment, the request message sent by the service requesting apparatus 60 to the service negotiation apparatus 70 may carry the first public network communication address, and the request forwarding module 702 may directly send the request message to the service response apparatus 80 as the service request. For example, in some examples of this embodiment, the service requesting apparatus 60 is an AS, and the service response apparatus 80 is a terminal. When the AS requests the terminal to start a certain service, it will carry its own public network IP address in the request message sent to the service negotiation apparatus 70. Upon receipt of the request message from the AS, the request forwarding module 702 may directly send the request message to the terminal as the service request without modifying the public network IP address in the request message.

In other examples of this embodiment, the request message sent by the service requesting apparatus 60 to the service negotiation apparatus 70 carries a private network communication address of the service requesting apparatus 60, and the request forwarding module 702 needs to generate a service request based on the first public network communication address of the service requesting apparatus 60 and the request message, for example, by modifying the private network communication address in the request message into the first public network communication address to generate a service request, and then send the service request to the service response apparatus 80. For example, in some examples of this embodiment, the AS serves as the service requesting apparatus 60 and the terminal serves as the service response apparatus 80, the request message sent by the AS to the service negotiation apparatus 70 carries the private network IP address of the AS. Upon receipt of the request message, the request forwarding module 702 needs to modify the private network IP address of the AS into the public network IP address of the AS, and then send the modified request message to the terminal as the service request. For another example, when the terminal serves as the service requesting apparatus 60 and the AS serves as the service response apparatus 80, the request message sent by the terminal to the service negotiation apparatus 70 through a NAT device also carries the private network IP address of the terminal. Upon receipt of the request message from the terminal, the request forwarding module 702 modifies the private network communication address in the request message into the public network IP address at the terminal side, so as to obtain the service request.

The service response apparatus 80 sends a service response corresponding to the service request to the service negotiation apparatus 70.

Upon receipt of the service request, the request receiving module 802 of the service response apparatus 80 may make a response to the request from the service requesting apparatus 60 based on the service request, so the response sending module 804 will send a service response to the service requesting apparatus 60 based on the service request. The response sending module 804 sends the service response to the service negotiation apparatus 70, so that the service negotiation apparatus 70 sends a response message carrying the second public network communication address of the service response apparatus 80 to the service requesting apparatus 60 based on the service response.

The response forwarding module 704 of the service negotiation apparatus 70 sends a response message carrying the second public network communication address of the service response apparatus 80 to the service requesting apparatus 60 based on the response from the service response apparatus 80.

Similar to the request forwarding module 702 sending a service request to the service response apparatus 80 based on the request from the service requesting apparatus 60, in this embodiment, the response message sent by the response forwarding module 704 to the service requesting apparatus 60 is generated based on the service response received from the service response apparatus 80, and carries the second public network communication address of the service response apparatus 80. Therefore, in some examples of this embodiment, the service response sent by the service response apparatus 80 to the service negotiation apparatus 70 may carry the second public network communication address, and the response forwarding module 704 may directly send the service response as a response message to the service requesting apparatus 60. For example, in some examples of this embodiment, the service response apparatus 80 is an AS, and the service requesting apparatus 60 is a terminal. When the AS sends a service response based on the request from the terminal, it may carry its own public network communication address in the service response. After the service negotiation apparatus 70 receives the service response carrying the public network communication address of the AS, the response forwarding module 704 may send the service response as a response message corresponding to the request message directly to the terminal without modifying the public network IP address in the service response.

In other examples of this embodiment, the service response sent by the service response apparatus 80 to the service negotiation apparatus 70 carries the private network communication address of the service response apparatus 80. The response forwarding module 704 needs to generate a response message based on the second public network communication address of the service response apparatus 80 and the service response, for example, by modifying the private network communication address in the service response into the second public network communication address to generate a response message, and then send the response message to the service requesting apparatus 60 as a request message sent by the service requesting apparatus 60. For example, in some examples of this embodiment, the AS serves as the service response apparatus 80 and the terminal serves as the service requesting apparatus 60, and the service response sent by the AS to the service negotiation apparatus 70 carries the private network IP address of the AS. In an embodiment, upon receipt of the service response, the response forwarding module 704 needs to modify the private network IP address of the AS in the service response into the public network IP address of the AS, and then send the modified service response to the terminal as a response message. For another example, when the terminal serves as the service response apparatus 80 and the AS serves as the service requesting apparatus 60, the terminal sends a service response to the service negotiation apparatus 70 through NAT device, and the service response also carries the private network IP address of the terminal. Upon receipt of the service response from the terminal, the response forwarding module 704 modifies the private network communication address in the service response into the public network IP address at the terminal side, so as to obtain a response message that may be sent to the AS side.

In some examples of this embodiment, the response message sent by the response forwarding module 704 to the terminal also includes a port number of the AS.

At the session negotiation stage, the service response apparatus 80 may obtain the first public network communication address of the service requesting apparatus 60 based on the service request sent by the service negotiation apparatus 70 to the service response apparatus 80. The service requesting apparatus 60 may obtain the second public network communication address of the service response apparatus 80 based on the response message sent by the service negotiation apparatus 70 to the service requesting apparatus 60. On this basis, the service requesting apparatus 60 and the service response apparatus 80 may establish a public network communication link between the service requesting apparatus 60 and the service response apparatus 80 based on the first public network communication address and the second public network communication address. The public network communication link is a communication link established based on the public network communication addresses, through which the service data may be transmitted between the service requesting apparatus 60 and the service response apparatus 80 to implement the service without being relayed through the service negotiation apparatus 70.

A process of establishing a public network communication link between the service response apparatus 80 and the service requesting apparatus 60 is briefly described below.

In an embodiment, in the process of establishing a public network communication link, a link establishment request may be initiated by the first link establishing module 606 of the service requesting apparatus 60 or the second link establishing module 806 of the service response apparatus 80. For example, in one example of this embodiment, the link establishment request is initiated by the first link establishing module 606. The service requesting apparatus 60 is actually a link establishment request terminal, and the service response apparatus 80 is a link establishment response terminal. The first link establishing module 606 sends the link establishment request to the service response apparatus 80 based on the second public network communication address obtained during session negotiation. Upon receipt of the link establishment request, the second link establishing module 806 may send a link establishment response to the service requesting apparatus 60 based on the first public network communication address obtained during session negotiation, thereby establishing a public network communication link with the service requesting apparatus 60. In another example of this embodiment, the link establishment request is initiated by the second link establishing module 806 of the service response apparatus 80 to the service requesting apparatus 60. The service response apparatus 80 serves as the link establishment request terminal and the service requesting apparatus 60 serves as the link establishment response terminal. The second link establishing module 806 sends a link establishment request to the service requesting apparatus 60 based on the first public network communication address obtained during session negotiation. After the first link establishing module 606 agrees to establish a communication link based on the public network upon receipt of the link establishment request, it may send a link establishment response representing affirmation to the service response apparatus 80. If it does not agree to establish a communication link based on the public network, the service requesting apparatus 60 may reject the link establishment request.

In some examples of this embodiment, upon receipt of the link establishment request sent by the link establishment request terminal, the link establishment response terminal may verify the link establishment request terminal, and allow the link establishment request terminal to establish a public network communication link therewith only after determining that the link establishment request terminal is a device with which it has previously performed session negotiation. In an embodiment, the link establishment response terminal may verify the authorized status of the link establishment request terminal by verifying the public network communication address of the link establishment request terminal. When the link establishment request terminal initiates a link establishment request to the link establishment response terminal, it may carry its own public network communication address in the link establishment request. Upon receipt of the link establishment request, the link establishment response terminal determines whether the public network communication address carried in the link establishment request is the public network communication address obtained thereby at the session negotiation stage.

In an embodiment, assuming that the link establishment request terminal is the service requesting apparatus 60, the link establishment request sent by the link establishment request terminal carries the first public network communication address. Upon receipt of the link establishment request, the link establishment response terminal may compare the public network communication address carried in the link establishment request with the first public network communication address of the service requesting apparatus 60 obtained thereby during session negotiation, and determine whether the public network communication address carried in the link establishment request is consistent with the first public network communication address of the service requesting apparatus 60. If the public network communication address carried in the link establishment request is consistent with the first public network communication address of the service requesting apparatus 60, it indicates that the link establishment request is initiated by the service requesting apparatus 60 with which it has previously performed session negotiation, so the status of the link establishment request terminal is authorized, and the link establishment response terminal may initiate a link establishment response representing affirmation, thus establishing a public network communication link with the link establishment request terminal. If the public network communication address carried in the link establishment request is inconsistent with the first public network communication address of the service requesting apparatus 60, it indicates that the link establishment request terminal initiating the link establishment request is not the service requesting apparatus 60, so the service response terminal as the link establishment response terminal may reject the link establishment request of the link establishment request terminal.

Assuming that the link establishment request terminal is a service response apparatus 80, the link establishment response terminal is the service requesting apparatus 60. As a link establishment request terminal, the service response apparatus 80 carry its own public network communication address, i.e., the second public network communication address, when sending the link establishment request to the link establishment response terminal. Upon receipt of the link establishment request, the link establishment response terminal compares the public network communication address in the link establishment request with the second public network communication address obtained thereby from the service response apparatus 80 at the session negotiation stage. If the public network communication address carried in the link establishment request is consistent with the second public network communication address of the service response apparatus 80, it indicates that the link establishment request terminal is the service response apparatus 80 with which it has performed session negotiation. Therefore, as a link establishment response terminal, the service requesting apparatus 60 may send a link establishment response representing agreement to the link establishment request terminal based on the second public network communication address obtained in advance, establish a public network communication link with the link establishment request terminal, and then transmit service data through the communication link. If the link establishment response terminal finds through comparison that the public network communication address carried in the link establishment request received is not the second public network communication address, it indicates that the status of the link establishment requesting terminal is unauthorized, so the link establishment response terminal may reject the link establishment request of the link establishment requesting terminal.

In some examples of this embodiment, the service requesting apparatus 60 is the terminal. In other examples of this embodiment, the service requesting apparatus 60 is the AS. Considering that the terminals usually implement external communication through the NAT device in the communication system, it may not be easy for external devices to actively initiate communication with the terminal. Therefore, in this embodiment, the link establishment request may be initiated by the terminal to the AS, that is, the terminal serves as the link establishment request terminal and the AS serves as the link establishment response terminal. Therefore, when the terminal is the service requesting apparatus 60, the link establishment request is sent from the service requesting apparatus 60 to the service response apparatus 80, and when the terminal is the service response apparatus 80, the link establishment request is sent from the service response apparatus 80 to the service requesting apparatus 60.

According to the apparatus for service requesting apparatus, service negotiation and service response provided in this embodiment, at the session negotiation stage, the service request carrying the first public network communication address of the service requesting apparatus is sent to the service response apparatus, and the response message carrying the second public network communication address of the service response apparatus is sent to the service requesting apparatus based on the response of the service response apparatus, so that the service requesting apparatus and the service response apparatus may obtain the public network communication addresses of each other. Based on the two public network communication addresses, the public network communication link is established between the service requesting apparatus and the service response apparatus for the service data transmission to implement the service, thus avoiding the problems of low service data transmission rate and long delay in data transmission caused by relaying the service data through the service negotiation apparatus for transmission, and improving the service experience of users at the apparatus side.

### Embodiment Five

This embodiment describes a service implementation scheme on the basis of Embodiment Four. It is assumed that the service requesting apparatus is a terminal, the service response apparatus is an AS, and the service negotiation apparatus is an SBC. For example, it is assumed that the terminal needs to upload video data to the AS. Meanwhile, it is assumed that the message sent by the AS to the SBC still carries a private network communication address of the AS.

The terminal sends a request message to the SBC through a NAT device.

As the terminal needs to upload video data to the AS, the terminal may initiate a video data upload request to the AS. The request message may carry the type of service requested by the terminal.

In this embodiment, the terminal implements external communication through the NAT device, and the request message sent by the terminal to the NAT device carries the private network communication address of the terminal, while a source address of the request message is the private network communication address of the terminal and a destination address thereof is the public network communication address of the SBC. Upon receipt of the request message, the NAT device will translate the source address in the request message and modify the source address into the public network communication address of the NAT device. In an embodiment, the public network communication address of the NAT device may be the public network communication address of the terminal. In this embodiment, the terminal serves as the service requesting terminal, so the public network communication address of the NAT device is actually the first public network communication address.

Upon completion of the translation from the private network address to the public network address, the NAT device may send the translated request message to the destination address, that is, to the SBC.

Upon receipt of the request message forwarded by the NAT device, the SBC may generate a service request based on the request message. The service request generated by the SBC carries the public network communication address, i.e., the first public network communication address, at the terminal side. In an embodiment, the SBC may modify the private network communication address of the terminal in the request message to the first public network communication address at the terminal side, so as to obtain the service request.

In some examples of this embodiment, it is not necessary to establish a public network communication link between the terminal and the AS for all services requested by the terminal. For example, in some cases, the AS does not want to disclose its own public network communication address for some services requested by the terminal. Therefore, this embodiment provides a process of the SBC generating a service request for reference,

The SBC determines whether the service requested by the service requesting terminal supports service data transmission through the public network communication link. In this embodiment, the SBC may determine whether the service requested by the service request supports transmission through the public network communication link based on a message body of the request message. For example, in this embodiment, when the terminal requests to upload video data, it may carry the requested service type in the message body, and the SBC determines whether the requested service supports service data transmission through the public network communication link based on the service type in the message body.

In other examples of this embodiment, the SBC may determine whether the service requested by the service requesting terminal supports service data transmission through the public network communication link based on a message header of the request message. In an embodiment, corresponding indication information should exist in the message header of the request message sent by the service requesting terminal to the SBC. For example, the message header of the request message includes a service indication. The service indication is "0", indicating that the service requested by the service requesting terminal supports transmission based on the public network communication address. The service indication is "1", indicating that the service requested by the service requesting terminal does not support service data transmission based on the public network communication address. In an embodiment, before sending the request message, the service requesting terminal may determine whether the service supports service data transmission through the public network communication link based on the type of service requested thereby, that is, whether the service supports the direct media connection. The service requesting terminal then configures the message header of the request message at the determination stage.

In some other examples of this embodiment, the SBC may determine whether the service requested by the service requesting terminal supports service data transmission through the public network communication link by combining the message header and message body of the request message. For example, the SBC determines that the service requested by the service requesting terminal supports service data transmission through the public network communication link only when the results from determination by both the message header and the message body of the request message indicate that the service requested by the service requesting terminal supports direct media connection.

If the SBC determines through judgment that the service requested by the service requesting terminal supports service data transmission through the public network communication link, it needs to generate a service request carrying the first public network communication address of the service requesting terminal.

If the SBC determines through judgment that the service requested by the service requesting terminal does not support the service data transmission through the public network communication link, it may determine that the service data corresponding to the service will still be transmitted in the same mode as in the related technologies, that is, by relaying through the SBC. Since the SBC and the AS are in communication based on the private network communication address, the SBC needs to carry its own private network communication address in the generated service request.

After generating a service request, the SBC may send the service request to the AS. In an embodiment, in communication with the AS, the SBC may relay the data through a CSCF network element. For example, the SBC first sends the service request to the CSCF network element, and then the CSCF network element forwards the service request to the AS. Of course, the communication mode between the SBC and the AS is not limited to the modes shown in the examples of the present application.

Upon receipt of the service request from the SBC, the AS may send the service response based on the service request, allowing the SBC to send a response message corresponding to the request message to the terminal based on its own response.

In this embodiment, at the session negotiation stage, the AS is indifferent to whether the service requested by the terminal supports service data transmission through the public network communication link or not, so no matter what type of service the terminal requests, the AS always carries its own private network communication address when sending the service response to the SBC.

After generating the service response, the AS sends the service response carrying its own private network communication address to the SBC. In an embodiment, a transmission route of the service response corresponds to that of the service request, so the service response may be sent to the SBC through the CSCF network element in some examples of this embodiment.

Upon receipt of the service response from the AS, the SBC generates a response message to be sent to the terminal based on the service response. The response message carries the public network communication address, i.e., the second public network communication address, at the AS side.

In an embodiment, if not all service data of the services are supported to be transmitted through the public network communication link, SBC needs to determine whether the service corresponding to the service response supports the transmission through the public network communication link before generating the response message. In an embodiment, if the SBC directly determines that the service response it receives from the AS is for the service request sent previously, it may determine how to modify the private network communication address in the service response based on whether the service requested by the service request supports transmission through the public network communication link.

In other examples of this embodiment, the SBC may also make a determination based on the message header and/or message body of the response message. Refer to the process of the SBC generating service request for mode of determination, which will not be repeated herein.

If it is determined by the SBC that the service corresponding to the service response supports direct media connection, the SBC may modify the private network communication address at the AS side in the service response, and modify the private network communication address at the AS side into the public network communication address at the AS side, so as to obtain a response message. If it is determined by the SBC that the service corresponding to the service response does not support direct media connection, the SBC may modify the private network communication address in the service response to its own public network communication address to generate a response message.

After generating the response message, the SBC may transmit the response message to the NAT device, allowing the NAT device to transmit the response message to the terminal based on the private network communication address of the terminal.

Upon receipt of the response message, the terminal may send a link establishment request to the AS based on the public network communication address carried in the response message if it determines that the AS agrees to make a response to its request message. In an embodiment, when the terminal sends a link establishment request to the AS, it also needs to translate the private network communication address into the public network communication address through the NAT device, and then send the translated request to the AS. In this embodiment, the link establishment request sent by the terminal carries the public network communication address at the terminal side.

Upon receipt of the link establishment request sent by the terminal side, the AS may verify the status of the link establishment request terminal based on the link establishment request, and determine whether the service requesting terminal that sends the link establishment request is the service requesting terminal with which it has previously performed session negotiation. In an embodiment, the AS may determine whether the public network communication address carried in the link establishment request is the public network communication address, i.e., the first public network communication address, at the terminal side obtained thereby at the session negotiation stage.

Under the condition of determining that the public network communication address in the link establishment request is the first public network communication address, the AS determines that the status of the link establishment request terminal is authorized.

In other examples of this embodiment, the AS authenticates the status of the link establishment request terminal based on the public network communication address in the link establishment request, and also based on the private network communication address of the link establishment request terminal in the link establishment request. In an embodiment, when the SBC sends a service request to the AS based on the request message from the terminal, the service request also carries the private network communication address of the terminal. In this way, upon receipt of the link establishment request, the AS may authenticate not only the public network communication address in the link establishment request, but also the private network communication address in the link establishment request to determine whether the private network communication address in the link establishment request is the private network communication address carried in the service request. If the AS determines that the public network communication address and the private network communication address in the link establishment request are consistent with those in the service request, it may confirm that the link establishment request terminal is the service requesting terminal.

When determining that the link establishment request is initiated by the previous service requesting terminal, the AS may send a link establishment response representing affirmation to the terminal.

Upon receipt of the link establishment response, the terminal may establish a public network communication link with the AS based on the second public network communication address, and then transmit video data to the AS through the communication link to implement the corresponding data transmission service.

According to the service implementation scheme provided in this embodiment, the terminal and the AS may establish a communication link for service data transmission through the public network communication addresses thereof obtained at the session negotiation stage, so as to avoid the problem that the service data is required to be relayed through the SBC before transmission. Furthermore, before sending the service request to the AS or the response message to the terminal, the SBC may determine whether the service requested by the service requesting terminal supports direct media connection to determine whether to carry the public network communication address of the service requesting terminal or the public network communication address of the service response terminal, so that some services may be transmitted through the public network communication link, while other services may continue to be implemented by schemes in the related technologies, which may be compatible with solutions in related technologies while improving user experience.

In the service implementation scheme provided in this embodiment, upon receipt of the link establishment request, the AS may verify the status of the link establishment request terminal, so as to ensure that the link establishment request terminal with which it establishes the public network communication link is the terminal with which it has previously performed session negotiation, thus improving its security.

Although Embodiment Five only describes the service implementation scheme in which the terminal serves as the service requesting terminal and the AS serves as the service response terminal, the implementation principle of the scheme in Embodiment Five is also applicable to the scenario where the terminal serves as the service response terminal to receive the request from the AS.

### Embodiment Six

This embodiment also describes a service implementation scheme on the basis of Embodiment Four. Here, it is assumed that the service requesting apparatus 60 in Fig. 6 is an AS, the service negotiation apparatus 70 in Fig. 7 is an SBC, and the service response apparatus 80 in Fig. 8 is a terminal. For example, it is assumed that the AS requests the terminal to receive its push message. At the same time, it is also assumed that AS may choose to carry its own public network address or its own private network address according to the actual situation when sending the message to the SBC.

In this embodiment, when the AS needs to initiate a request to the terminal, it will first determine whether the service it is currently requesting supports service data transmission through the public network communication link, that is, whether the service it is currently requesting supports the direct media connection or not. If so, the AS will carry its own public network communication address in the generated request information. Since the AS is the service requesting terminal in this embodiment, the public network communication address of the AS is the first public network communication address.

In an embodiment, if the AS determines through judgment that the service it is currently requesting does not support service transmission through the public network communication link, it indicates that the service data of the service still needs to be relayed through the SBC. Therefore, the AS adds its own private network communication address to the request message when generating the request message.

The AS generates a request message and sends the request message to the SBC. In an embodiment, the AS and the SBC may be in communication through the CSCF network element, that is, the AS sends the request message to the CSCF network element, and then the CSCF network element sends the request message to the SBC. In some other examples, the communication mode between AS and SBC may be different from the above modes.

Upon receipt of the request message sent by the AS, the SBC needs to generate a service request based on the request message. In this embodiment, the SBC also needs to determine whether the service requested by the AS supports service data transmission through the public network communication link. If so, the SBC may obtain the service request carrying the public network communication address, i.e., the first public network communication address, of the AS, without modifying the communication address in the request message. If not, the SBC needs to modify the service request carrying the private communication address of the AS sent by AS, and may obtain the service request only after modifying the private network address of the AS in the service request into the public network address of the SBC.

In an embodiment, when determining whether the service requested by AS supports direct media connection, the SBC may determine based on the message body of the request message. The message body contains the type of service requested by the AS, so the SBC determines whether the service supports direct media connection based on the type of service requested. Of course, since the AS also needs to determine whether the service requested thereby supports direct media connection service when sending the request message, in one example of this embodiment, the AS, after obtaining a judgment result, may carry the judgment result in the request message and send it to the SBC. In this way, upon receipt of the request message, the SBC may directly determine whether the service requested by the AS supports direct media connection based on the received request message, thus avoiding the SBC from making a judgment based on the service type in the request message. For example, the message header of the request message sent by the AS to the SBC includes a service indication. The value of the service indication is "0", indicating that the service requested by the request message supports the direct media connection service. The value of the service indication is not "0", indicating that the service requested by the request message does not support the direct media connection service.

Assuming that the SBC determines that the service requested by the request message supports the direct media connection service, the SBC may send the request message carrying the public network communication address of the AS to the terminal as the service request. If the SBC determines that the service requested by the request message does not support the direct media connection service, the SBC may send the service request carrying its own public network communication address to the terminal.

Upon receipt of the service request through the NAT device, the terminal may send a service response to the SBC based on the service request. The service response carries the private network communication address of the terminal. In an embodiment, the service response needs to be sent to the SBC through the NAT device. Upon receipt of the service response, the NAT device may modify a source address of the service response from the private network communication address of the terminal to its own public network communication address, thus translating the private network communication address into the public network communication address. Since the terminal serves as the service response terminal in this embodiment, the public network communication address of the NAT device may actually be regarded as the public network communication address, i.e., the second public network communication address, of the terminal.

Upon receipt of the service response from the terminal, SBC may generate a response message carrying the second public network communication address at the terminal side based on the service response. In this example, as the service requested by the AS supports the direct media connection, the SBC will carry the second public network communication address of the terminal in the response message. In other examples of this embodiment, if the service requested by the AS does not support the direct media connection, the SBC needs to carry its own private network communication address in the response message.

In addition, in this embodiment, if the SBC can determine which service request the service response belongs to upon receipt of the service response from the terminal side, it may directly determine whether the service corresponding to the service response supports direct media connection based on the service request. However, if SBC cannot determine which service request the received service response corresponds to, it needs to determine whether the service corresponding to the service response supports the direct media connection based on the message header and/or message body when generating a response message based on the service response, so as to determine whether the corresponding response message carries the second public network communication address at the terminal side or the private network communication address of the SBC.

After the SBC generates the response message, it may send the response message to the AS through the CSCF network element, so that the AS may determine whether the terminal accepts its request based on the response message. After the AS determines that the terminal has made a characterization-positive response representing affirmation to its service request, it may establish a public network communication link with the terminal upon receipt of the response message.

After the response from the terminal arrives at the AS side, the terminal may send a link establishment request to the AS based on the first public network communication address carried in the service request, that is, the public network communication address at the AS side. In an embodiment, when the terminal sends a link establishment request to the AS, it also needs to translate the private network communication address into the public network communication address through the NAT device, and then send the translated request to the AS.

Upon receipt of the link establishment request sent by the terminal side, the AS may verify the status of the link establishment request terminal based on the link establishment request, and determine whether the service requesting terminal that sends the link establishment request is the service response terminal with which it has previously performed session negotiation. In an embodiment, the AS may determine whether the public network communication address carried in the link establishment request is the public network communication address, i.e., the second public network communication address, at the terminal side obtained thereby at the session negotiation stage.

Under the condition of determining that the public network communication address in the link establishment request is the second public network communication address, the AS determines that the status of the link establishment request terminal is authorized.

In other examples of this embodiment, the AS authenticates the status of the link establishment request terminal based on the public network communication address in the link establishment request, and also based on the private network communication address of the link establishment request terminal in the link establishment request. In an embodiment, when the SBC sends the response message to the AS based on the service response from the terminal, the response message also carries the private network communication address of the terminal. In this way, upon receipt of the link establishment request, the AS may authenticate not only the public network communication address in the link establishment request, but also the private network communication address in the link establishment request to determine whether the private network communication address in the link establishment request is the private network communication address carried in the response message. If the AS determines that the public network communication address and the private network communication address in the link establishment request are consistent with those in the response message, it may confirm that the link establishment request terminal is the service response terminal.

When determining that the link establishment request is initiated by the previous service response terminal, the AS may send a link establishment response representing affirmation to the terminal.

Upon receipt of the link establishment response, the terminal may establish a public network communication link with the AS based on the first public network communication address, and then receive a push message of the AS through the communication link to implement the corresponding data transmission service.

According to the service implementation scheme provided by the embodiment of the present application, the terminal and the AS may obtain the public network communication addresses thereof at the session negotiation stage to establish a communication link for service data transmission, thereby avoiding the problem that the service data is required to be relayed through the SBC before transmission. In the service implementation scheme provided in this embodiment, upon receipt of the link establishment request, the AS may verify the status of the link establishment request terminal, so as to ensure that the with which it establishes the public network communication link is the terminal with which it has previously performed session negotiation, thus improving its security.

Although Embodiment Six only describes the service implementation scheme in which the AS serves as the service requesting terminal and the terminal serves as the service response terminal, the implementation principle of the scheme in Embodiment Six is also applicable to the scenario where the AS serves as the service response terminal to receive the request from the terminal.

### Embodiment Seven

In this embodiment, a storage medium is first provided, in which one or more computer programs readable, compilable and executable by one or more processors may be stored. In this embodiment, the storage medium may store at least one of a service requesting program, a service negotiation program and a service response program. In an embodiment, the service requesting program can be executed by one or more processors to implement any of the methods for service requesting described in Embodiment One to Embodiment Three. The service negotiation program can be executed by one or more processors to implement any one of the methods for service negotiation described in Embodiment One to Embodiment Three. The service response program can be executed by one or more processors to implement any of the methods for service response described in Embodiment One to Embodiment Three.

In this embodiment, a network device is further provided. With reference to Fig. 9, the network device 90 includes a processor 91, a memory 92, and a communication bus 93 configured to connect the processor 91 and the memory 92. In an embodiment, the memory 92 may be the aforementioned storage medium storing at least one of the service requesting program, the service negotiation program and the service response program.

When the service requesting program is stored in the memory 92, the processor 91 may read, compile and execute the service requesting program to implement any of the methods for service requesting described in Embodiment One to Embodiment Three. The network device 90 may be a terminal or an AS, and implements any of the service requesting methods described in Embodiment One to Embodiment Three. The details of the service requesting methods can be found in the description of the above embodiments, which will not be repeated in the present application.

When the service negotiation program is stored in the memory 92, the processor 91 may read, compile and execute the service negotiation program to implement any of the methods for service negotiation described in Embodiment One to Embodiment Three. The network device 90 may be an SBC and implements any of the methods for service negotiationdescribed in Embodiment One to Embodiment Three. The details of the methods for service negotiation can be found in the description of the above embodiments, which will not be repeated in the present application.

When the service response program is stored in the memory 92, the processor 91 may read, compile and execute the service response program to implement any of the methods for service response described in Embodiment One to Embodiment Three. The network device 90 may be a terminal or an AS, and implements any of the methods for service response described in Embodiment One to Embodiment Three. The details of the methods for service response can be found in the description of the above embodiments, which will not be repeated in the present application.

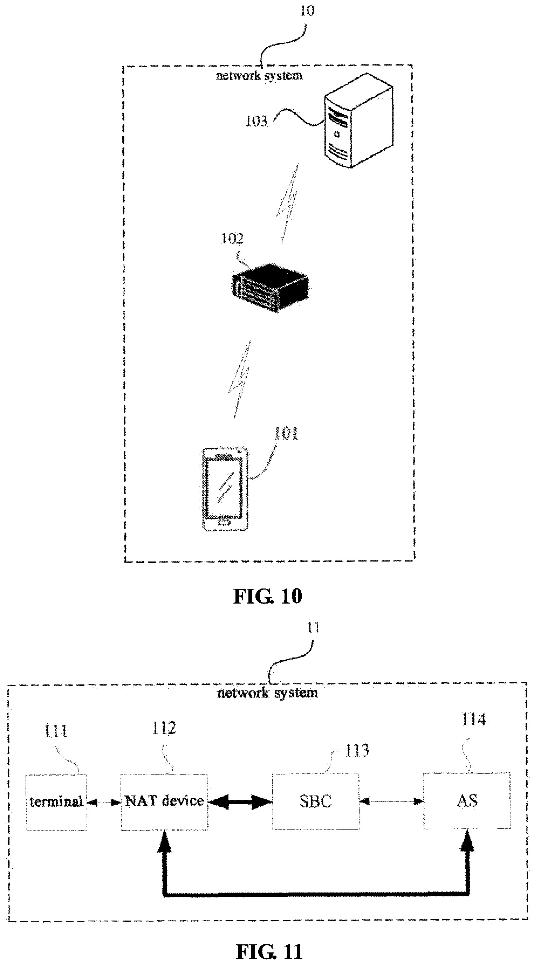

This embodiment further provides a network system. With reference to Fig. 10, the network system 10 includes a terminal 101, an SBC 102 and an AS 103. In an embodiment, the SBC 102 is a network device in which the processor in Fig. 9 may execute the service negotiation program to implement the method for service negotiation. In one example, the terminal 101 is a network device in which the processor in Fig. 9 may execute the service requesting program to implement the method for service requesting, and the AS 103 is a network device in which the processor in Fig. 9 may execute the service response program to implement the method for service response.

In another example of this embodiment, the terminal 101 is a network device in which the processor in Fig. 9 may execute the service response program to implement the method for service response, and the AS 103 is a network device in which the processor in Fig. 9 may execute the service requesting program and implement the method for service requesting.

In another example of this embodiment, the processor of the terminal 101 may either execute the service requesting program to implement the method for service requesting, or execute the service response program to implement the method for service response. At the same time, the processor of the AS 103 may execute both the service requesting program and the service response.

In the network system provided in this embodiment, at the service session negotiation stage, the SBC may send the service request carrying the first public network communication address of the service requesting terminal to the service response terminal based on the request from the service requesting terminal, and send the response message carrying the second public network communication address of the service response terminal to the service requesting terminal based on the response from the service response terminal. Therefore, the service requesting terminal and the service response terminal may establish a public network communication link based on the first public network communication address and the second public network communication address, allowing the service requesting terminal and the service response terminal to transmit the service data without relaying the data through the SBC, thereby shortening the service data transmission delay, and improving the service data transmission rate and the service experience of users at the terminal side.

### Embodiment Eight

This embodiment will describe a network system and a process of implementing services in the network system on the basis of Embodiment Seven, with reference to a schematic structural diagram of the network system 11 shown in Fig. 11.

The network system 11 includes a terminal 111, a NAT device 112, an SBC 113 and an AS 114. In an embodiment, the terminal 111 is in communication with the NAT device 112 based on a private network IP address, the NAT device 112 is in communication with the SBC 113 based on a public network IP address, and the SBC 113 is in communication with the AS 114 based on the private network IP address. In addition, in the network system provided in this embodiment, when a service is required between the terminal 111 and the AS, the NAT device 112 and the AS 114 may be in communication based on the public network IP address after session negotiation.

### Example 1

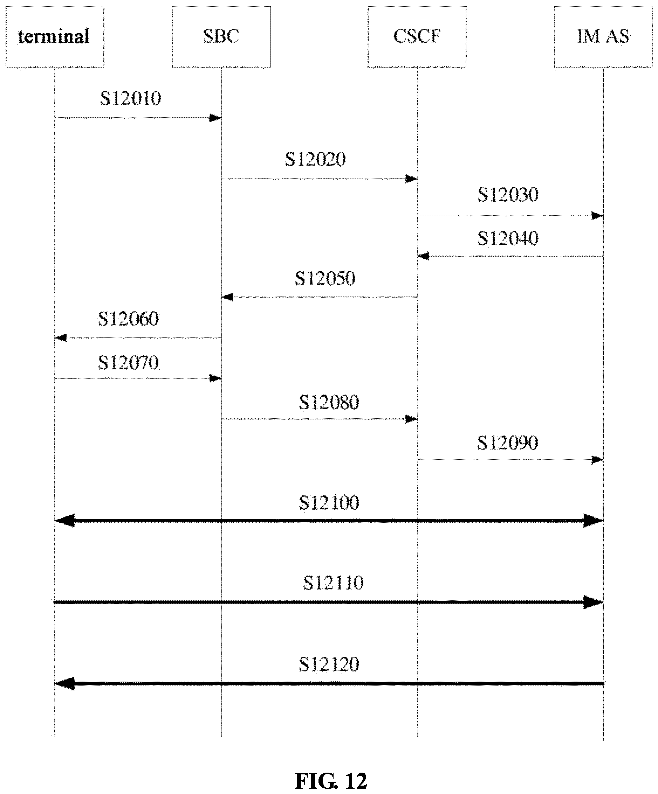

Fig. 12 shows a flow chart of initiating a service to an IM AS by a terminal which is a service requesting terminal under an MSRP protocol.

In a step of S12010, the terminal initiates a file transfer request (INVITE) to the SBC.

A message Session Description Protocol (SDP) for media negotiation contains a private network address of the terminal and the type of service requested this time.

In a step of S12020, after determining that the file transfer service supports the direct media connection, the SBC modifies the private network IP address of the terminal into the public network IP address of the terminal translated by a NAT device, and forwards the request to a CSCF.

In a step of S12030, the IM AS receives the INVITE request from the CSCF and extracts the public network address information of the terminal.

In a step of S12040, after determining that the file transfer service supports direct media connection, the IM AS carries the public network address of the IM AS in the session response, and forwards the session response to the CSCF.

In a step of S12050, the CSCF forwards the response to the SBC.

In a step of S12060, after determining that the service session supports direct media connection, the SBC forwards the session response to the terminal without modifying media plane address information in the response.

In a step of S12070, the terminal sends an Acknowledgement (ACK) request to the SBC to confirm the session establishment.

In a step of S12080, the SBC forwards the ACK request to the CSCF.

In a step of S12090, the CSCF forwards the ACK request to the IM AS.

In a step of S12100, the terminal establishes a connection with the IM AS.

The terminal initiates a TCP connection establishment request to the IM AS, and the IM AS checks whether the address initiated by the terminal is consistent with the media plane address during session negotiation, and allows the TCP connection to be established if so.

In a step of S12110, the terminal sends an MSRP message to the IM AS.

The MSRP message sent by the terminal contains MSRP path information.

In a step of S12120, the IM AS returns an MSRP 200 OK response.

The MSRP 200 OK response indicates that the IM AS has received MSRP data information.

### Example 2

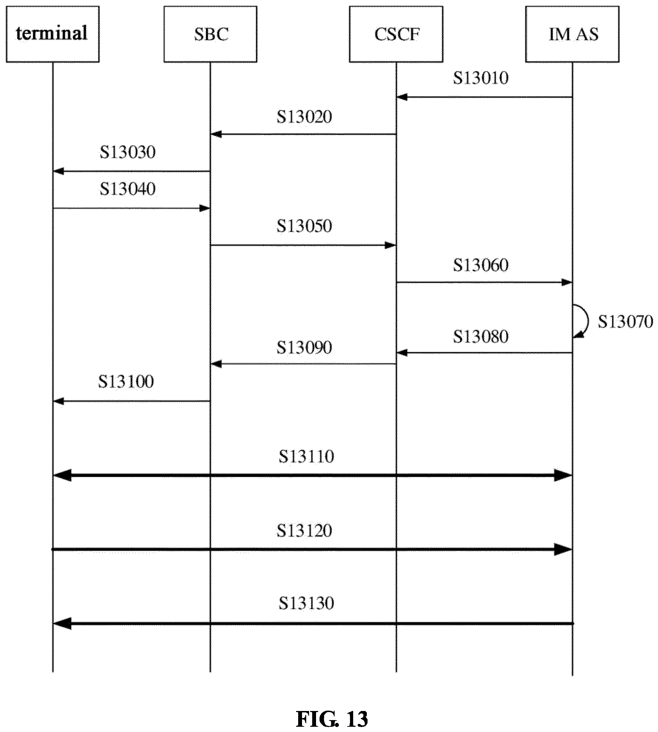

Fig. 13 shows a service flow chart under MSRP protocol, with the terminal serves as the service response terminal and the IM AS serves as the service requesting terminal. Taking the MSRP protocol as an example, it is a process of the terminal receiving the file transfer service.

In a step of S13010, the IM AS initiates a file transfer request.

When the IM AS is ready to send a file transfer request to the terminal, it carries a public network address of an IM AS media processing unit and the type of service requested this time in the requested media negotiation message body SDP after determining that the file transfer service supports direct media connection.

In a step of S13020, the CSCF forwards the service request to the SBC.

In a step of S13030, after determining that the file transfer service in the service request supports the direct media connection, the SBC forwards the request to the terminal without modifying a media plane address in the service request.

In a step of S13040, the terminal carries its own private network address in a 200 OK response.

In a step of S13050, after determining that the file transfer service supports direct media connection, the SBC modifies the private network address of the terminal into the public network address of the terminal in the session response, and forwards the session response to a CSCF.

In a step of S13060, the CSCF forwards the response to the IM AS.

In a step of S13070, the IM AS determines that the service session supports the direct media connection, and records a media plane IP address of the terminal in the response.

In a step of S13080, the IM AS sends an ACK request to the CSCF to confirm the session establishment.

In a step of S13090, the CSCF forwards the ACK request to the SBC.

In a step of S13100, the SBC forwards the ACK request to the terminal.

In a step of S13110, the terminal establishes a connection with the IM AS.

The terminal initiates a TCP connection establishment request to the IM AS, and the IM AS checks whether the address initiated by the terminal is consistent with the media plane address during session negotiation, and allows the TCP connection to be established if so.

In a step of S13120, the IM AS sends an MSRP message to the terminal.

The MSRP message sent by the IM AS contains MSRP path information.

In a step of S13130, the terminal returns an MSRP 200 OK response.

The MSRP 200 OK response indicates that the terminal has received MSRP data information.

### Example 3

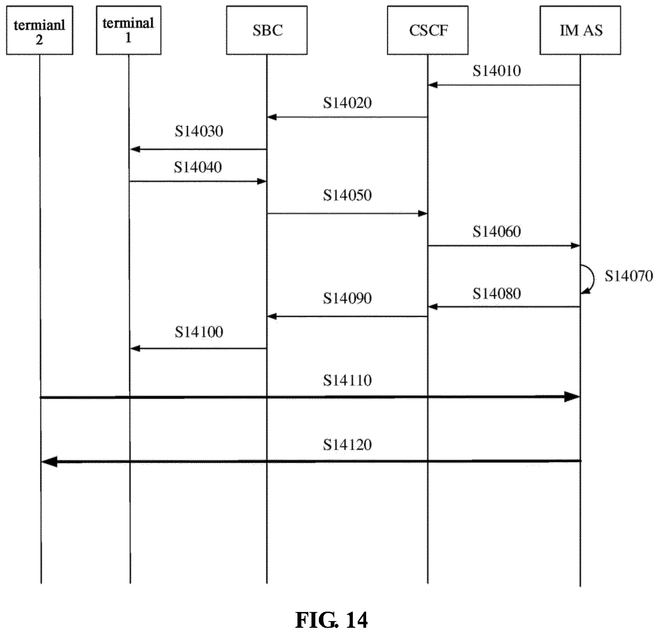

Fig. 14 shows the security maintenance of the network system, describing how the network system provided in the present application defends against media attacks initiated by a malicious terminal (e.g., a terminal 2) under the MSRP protocol.

In a step of S14010, the IM AS initiates a file transfer request.

When the IM AS is ready to send a file transfer request to a terminal 1, it first determines whether the file transfer service supports direct media connection or not. If so, the IM AS carries its own public network IP address and the type of service requested this time in the requested media negotiation message body SDP.

In a step of S14020, the CSCF forwards the service request to the SBC.

In a step of S14030, after determining that the file transfer service supports direct media connection, the SBC forwards the request to the terminal 1 without modifying a media plane address in the service request.

In a step of S14040, the terminal 1 carries its own private network address in the 200 OK response.

In a step of S14050, after determining that the file transfer service supports direct media connection, the SBC modifies the private network address of the terminal 1 into the public network IP address of the terminal 1 in the session response, and forwards the session response to the CSCF.

In a step of S14060, the CSCF forwards the response to the IM AS.

In a step of S14070, the IM AS determines that the service session supports the direct media connection, and records a media plane IP address of the terminal 1 in the response.

In a step of S14080, the IM AS sends an ACK request to the CSCF to confirm the session establishment.

In a step of S14090, the CSCF forwards the ACK request to the SBC.

In a step of S14100, the SBC forwards the ACK request to the terminal 1.

In a step of S14110, the terminal 2 initiates a media attack.

The terminal 2 initiates a TCP connection establishment request to the IM AS, and the IM AS checks whether the address initiated by the terminal 2 is consistent with the media plane address during session negotiation, and forbid the establishment of TCP connection with the terminal 2 if not.

In a step of S14120, the IM AS rejects the establishment of TCP connection with the terminal 2 and returns Reset the connection (RST). It does not release any session but waits for the terminal 1 to establish a media connection.

All or some of the steps, systems, functional modules/units in the method disclosed above may be implemented as software (which may be implemented with program code executable by a computing device), firmware, hardware, and appropriate combinations thereof. In a hardware implementation, partitioning between functional modules/units mentioned in the above description does not necessarily correspond to partitioning of physical components. For example, a physical component may have multiple functions, or a function or step may be performed by several physical components in cooperation. Some or all of that physical component may be implemented as software execute by a processor, such as a central processor, digital signal processor or microprocessor, or as hardware, or as an integrated circuit, such as an application-specific integrated circuit. Such software may be distributed over a computer-readable medium, executed by a computing device, and in some cases the steps shown or described may be performed in a sequence different from that herein, the computer-readable medium may include a computer storage medium (or non-transitory medium) and a communication medium (or transitory medium). The term computer storage medium in this application includes volatile and non-volatile, removable and non-removable media implemented in any method or technique for storing information, such as computer-readable instructions, data structures, program modules or other data. Computer storage media include, but are not limited to, random access memories (RAM), read-only memories (ROM), electrically erasable programmable read only memory (EEPROM), flash memory or other memory technologies, compact disc read-only memory (CD-ROM), digital video disc (DVD) or other optical disk storage, magnetic cassettes, magnetic tapes, magnetic disk storage or other magnetic storage devices, or any other media that may be configured to store desired information and that may be accessed by a computer. Further, the communication medium typically contains computer-readable instructions, data structures, program modules, or other data in a modulated data signal such as a carrier wave or other transmission mechanism, and may include any information delivery medium. Therefore, this application is not limited to any specific combination of hardware and software.

## Claims

1. A method for service negotiation, comprising:
sending a service request carrying a first public network communication address of a service requesting terminal to a service response terminal based on a request from the service requesting terminal;
sending a response message to the service requesting terminal based on a response from the service response terminal, wherein the response message carries a second public network communication address of the service response terminal, the first public network communication address and the second public network communication address are configured to establish a public network communication link between the service response terminal and the service requesting terminal, and the public network communication link is a communication link established based on the public network communication addresses.

2. The method of claim 1, wherein the service requesting terminal is an Application Server (AS) and the service response terminal is a terminal, sending a service request carrying a first public network communication address of a service requesting terminal to a service response terminal based on a request from the service requesting terminal comprises:
receiving a request message carrying a private network communication address of the AS sent by the AS;
generating a service request by modifying the private network communication address in the request message into a public network communication address of the AS;
sending the service request to the terminal;
or
receiving a request message carrying a public network communication address of the AS sent by the AS;
generating a service request carrying the public network communication address of the AS based on the request message;
sending the service request to the terminal.

3. The method for service negotiation of claim 1, wherein the service requesting terminal is the terminal and the service response terminal is the AS, and sending a service request to the service response terminal based on a request from the service requesting terminal comprises:
receiving a request message sent by the terminal;
generating a service request by adding a public network communication address of the terminal to the request message;
sending the service request to the AS.

4. The method of any one of claims 1 to 3, before sending a service request carrying a first public network communication address of a service requesting terminal to a service response terminal based on a request from the service requesting terminal, further comprising:
determining that the service requested by the service requesting terminal supports service data transmission through the public network communication link.

5. The method of claim 4, wherein determining that the service requested by the service requesting terminal supports service data transmission through the public network communication link comprises:
determining that the service requested by the service requesting terminal supports service data transmission through the public network communication link based on at least one of a message header and a message body of the request message sent by the service requesting terminal.

6. The method of claim 5, wherein determining that the service requested by the service requesting terminal supports service data transmission through the public network communication link based on the message body of the request message sent by the service requesting terminal comprises:
determining that the service requested by the service requesting terminal supports service data transmission through the public network communication link based on a service type in the message body of the request message sent by the service requesting terminal.

7. The method of claim 4, wherein the service requesting terminal is the terminal and the service response terminal is the AS, and further comprising:
sending a service request carrying a private network communication address of a local terminal to the AS in response to determining that the service requested by the service requesting terminal does not support the service data transmission through the public network communication link;
receiving a service response carrying a private network communication address of the AS sent by the AS;
modifying the private network communication address in the service response into a public network communication address of the terminal and then sending the modified address to the local terminal as a response message.

8. The method of claim 4, wherein the service requesting terminal is the AS and the service response terminal is the terminal, and further comprising:
generating a service request by modifying a private network communication address of the AS in a request message received from the AS into a public network communication address of the local terminal in response to determining that the service requested by the service requesting terminal does not support the service data transmission through the public network communication link;
sending the service request to the terminal;
receiving a service response sent by the terminal based on the service request;
generating a response message by adding a private network communication address of the local terminal to the service response;
sending the response message to the AS.

9. A method for service requesting, comprising:
sending a request message for a service request to a Session Border Controller (SBC), wherein the request message is configured to instruct the SBC to send a service request carrying a first public network communication address of a local terminal to a service response terminal;
receiving a response message sent by the SBC upon receipt of a service response from the service response terminal, wherein the response message carries a second public network communication address of the service response terminal;
establishing a public network communication link with the service response terminal based on the second public network communication address and transmitting service data through the public network communication link, wherein the public network communication link is a communication link established based on the public network communication addresses.

10. The method of claim 9, wherein the service response terminal is a terminal, establishing a public network communication link with the service response terminal based on the second public network communication address comprises:
receiving a link establishment request;
determining that a link establishment request terminal which initiates the link establishment request is the service response terminal;
sending a link establishment response to the service response terminal based on the second public network communication address, and establishing a public network communication link with the service response terminal.

11. The method of claim 10, wherein determining that a link establishment request terminal which initiates the link establishment request is the service response terminal comprises: determining that a communication address carried in the link establishment request is the second public network communication address.

12. The method of any one of claims 9 to 11, wherein the service response terminal is the terminal, sending a request message for a service request to a SBC comprises:
sending a request message carrying a private network communication address of the local terminal to the SBC;
or
sending a request message carrying a first public network communication address of the local terminal to the SBC.

13. The method of claim 12, before sending the request message carrying the first public network communication address of the local terminal to the SBC, further comprising:
determining that the service requested by the service request supports service data transmission through the public network communication link.

14. The method of claim 9, wherein the service response terminal is an Application Server (AS), establishing a public network communication link with the service response terminal based on the second public network communication address comprises:
sending a link establishment request to the service response terminal based on the second public network communication address, wherein the link establishment request carries the first public network communication address of the local terminal;
receiving a link establishment response sent by the service response terminal after determining the authorized status of the local terminal, and establishing a public network communication link with the service response terminal.

15. A method for service response, comprising:
receiving a service request carrying a first public network communication address of a service requesting terminal sent by a Session Border Controller (SBC);
sending a service response corresponding to the service request to the SBC, wherein the service response is configured to instruct the SBC to send a response message carrying a second public network communication address of a local terminal to the service requesting terminal;
establishing a public network communication link with the service requesting terminal based on the first public network communication address and transmitting service data through the public network communication link, wherein the public network communication link is a communication link established based on the public network communication address.

16. The method of claim 15, wherein the service requesting terminal is a terminal, establishing a public network communication link with the service requesting terminal based on the first public network communication address comprises:
receiving a link establishment request;
determining that a link establishment request terminal which initiates the link establishment request is the service requesting terminal;
sending a link establishment response to the service requesting terminal based on the first public network communication address, and establishing a public network communication link with the service requesting terminal.

17. The method of claim 16, wherein determining that a link establishment request terminal which initiates the link establishment request is the service requesting terminal comprises: determining that a communication address carried in the link establishment request is the first public network communication address.

18. The method of any one of claims 15 to 17, wherein the service requesting terminal is a terminal, sending a service response corresponding to the service request to the SBC comprises:
sending a service response carrying a private network communication address of a local terminal to the SBC;
or
sending a service response carrying a second public network communication address of a local terminal to the SBC.

19. The method of claim 15, wherein the service requesting terminal is an Application Server (AS), establishing a public network communication link with the service requesting terminal based on the first public network communication address comprises:
sending a link establishment request to the service requesting terminal based on the first public network communication address, wherein the link establishment request carries the second public network communication address of the local terminal;
receiving a link establishment response sent by the service requesting terminal after determining the authorized status of the service requesting terminal, and establishing a public network communication link with the service requesting terminal.

20. An apparatus for service negotiation, comprising:
a request forwarding module configured to send a service request carrying a first public network communication address of a service requesting terminal to a service response terminal based on a request from the service requesting terminal;
a response forwarding module configured to send a response message to the service requesting terminal based on a response from the service response terminal, wherein the response message carries a second public network communication address of the service response terminal, the first public network communication address and the second public network communication address are configured to establish a public network communication link between the service response terminal and the service requesting terminal, and the public network communication link is a communication link established based on the public network communication addresses.

21. An apparatus for service requesting, comprising:
a request sending module configured to send a request message for a service request to a Session Border Controller (SBC), wherein the request message is configured to instruct the SBC to send a service request carrying a first public network communication address of a local terminal to a service response terminal;
a response receiving module configured to receive the response message sent by the service response terminal through the SBC upon receipt of the service request, wherein the response message carries a second public network communication address of the service response terminal;
a link establishing module configured to establish a public network communication link with the service response terminal based on the second public network communication address and transmit service data through the public network communication link, wherein the public network communication link is a communication link established based on the public network communication address.

22. An apparatus for service response, comprising:
a request receiving module configured to receive a service request carrying a first public network communication address of a service requesting terminal sent by a Session Border Controller (SBC);
a response sending module configured to send a service response corresponding to the service request to the SBC, wherein the service response is configured to instruct the SBC to send a response message carrying a second public network communication address of a local terminal to the service requesting terminal;
a link establishing module configured to establish a public network communication link with the service requesting terminal based on the first public network communication address and transmit service data through the public network communication link, wherein the public network communication link is a communication link established based on the public network communication address.

23. A network device, comprising: a processor, a memory and a communication bus;
the communication bus is configured to perform communication between the processor and the memory;
the processor is configured to execute a service negotiation program stored in the memory to perform the method for service negotiation of any one of claims 1 to 8; or the processor is configured to execute the service requesting program stored in the memory to perform the method for service requesting of any one of claims 9 to 14; or the processor is configured to execute the service response program stored in the memory to perform the method for service response of any one of claims 15 to 19.

24. A network system, comprising: a terminal, a Session Border Controller (SBC), and an Application Server (AS), which are in communication in pairs;
the terminal is the network device of claim 23, wherein the processor can execute a service requesting program to perform the method for service requesting of any one of claims 9 to 14; the SBC is the network device of claim 23, wherein the processor can execute a service negotiation program to perform the method for service negotiation of any one of claims 1 to 8; the AS is the network device of claim 23, wherein the processor can execute a service response program to perform the method for service response of any one of claims 15 to 19;
or
the terminal is the network device of claim 23, wherein the processor can execute a service response program to perform the method for service response of any one of claims 15 to 19; the SBC is the network device of claim 23, wherein the processor can execute a service negotiation program to perform the method for service negotiation of any one of claims 1 to 8; the AS is the network device of claim 23, wherein the processor can execute a service requesting program to perform the method for service requesting of any one of claims 9 to 14.
